# EUROPÄISCHE PATENTSCHRIFT

(11) **EP 4 122 111 B1**
(45) Veröffentlichungstag und Bekanntmachung des Hinweises auf die Patenterteilung: **14.02.2024**
(21) Anmeldenummer: 21714126.6
(22) Anmeldetag: 19.03.2021
(51) Int. Cl.: H04B 5/00, B60L 13/03, H02K 41/02, B65G 54/02

(54) **DATENÜBERTRAGUNG IN EINEM LINEAREN TRANSPORTSYSTEM**
DATA TRANSFER IN A LINEAR TRANSPORT SYSTEM
TRANSFERT DE DONNÉES DANS UN SYSTÈME DE TRANSPORT LINÉAIRE

(30) Priorität: 20.03.2020 DE 102020107783
(43) Veröffentlichungstag der Anmeldung: 25.01.2023
(73) Patentinhaber: Beckhoff Automation GmbH, 33415 Verl (DE)
(72) Erfinder: ACHTERBERG, Jan, 47249 Duisburg (DE); BRINKER, Andreas, 49082 Osnabrück (DE); BETTENWORTH, Manuel, 33335 Gütersloh (DE); VORBOHLE, Thomas, 33397 Rietberg (DE)
(74) Vertreter: Patentanwaltskanzlei WILHELM & BECK
(86) Internationale Anmeldenummer: PCT/EP2021/057104
(87) Internationale Veröffentlichungsnummer: WO 2021/186040

(56) Entgegenhaltungen:
- EP-A1- 2 007 022
- WO-A1-01/02211
- WO-A1-95/34149
- WO-A1-2014/008893
- DE-A1-102012 204 917
- DE-A1-102014 117 200
- DE-A1-102015 102 236
- DE-A1-102018 111 715
- DE-A1-102018 118 814
- US-A1- 2002 180 279
- US-A1- 2003 230 941

## Beschreibung

Die Erfindung betrifft ein Verfahren zum Übertragen von Daten in einem linearen Transportsystem, eine Steuereinheit zum Steuern des Verfahrens, ein Computerprogramm zur Durchführung des Verfahrens, ein maschinenlesbares Speichermedium für das Computerprogramm. Ferner betrifft die Erfindung eine stationäre Einheit, eine bewegliche Einheit und ein lineares Transportsystem.

Diese Patentanmeldung beansprucht die Priorität der deutschen Patentanmeldung DE 10 2020 107 783.1, Aus dem Stand der Technik sind lineare Transportsysteme bekannt, bei denen eine bewegliche Einheit entlang einer Führungsschiene bewegt werden kann, und die einen Linearmotor zum Antreiben der beweglichen Einheit aufweisen, wobei der Linearmotor einen Stator und einen Läufer umfasst. Der Stator kann dabei zumindest ein entlang der Führungsschiene stationär angeordnetes Motormodul mit einer oder mehreren Antriebsspulen aufweisen, während die bewegliche Einheit am Schlitten angeordnet ist und einen oder mehrere Magnete aufweisen kann. Durch Bestromung der Antriebspulen kann eine Kraft auf die Magnete der beweglichen Einheit erzeugt werden, derart, dass sich die bewegliche Einheit entlang der Führungsschiene bewegt. Es kann ferner vorgesehen sein, dass die bewegliche Einheit beziehungsweise der Schlitten ein Werkzeug aufweist, wobei zum Betrieb des Werkzeugs Energie von der stationären Einheit zur beweglichen Einheit übertagen werden kann und Daten sowohl von der stationären Einheit zur beweglichen Einheit als auch von der beweglichen Einheit zur stationären Einheit übertragen werden können. Aus der deutschen Patentanmeldung DE 10 2018 111 715 A1 ist ein lineares Transportsystem bekannt, bei dem mittels Datenspulen Daten zwischen einer stationären Einheit und einer beweglichen Einheit übertragen werden können. Um eine solche Übertragung von Daten durchzuführen, kann es vorgesehen sein, eine Kommunikation zu verwenden, bei der die Datenspulen senden oder empfangen können, nicht jedoch beides gleichzeitig. Die bewegliche Einheit muss dabei erkennen, dass eine Datenübertragung zu ihr erfolgen soll und ob ebenfalls eine Datenübertragung zurück zur stationären Einheit ausgeführt werden soll.

Eine Aufgabe der vorliegenden Erfindung ist es, ein verbessertes Verfahren zum Übertragen von Daten in einem linearen Transportsystem bereitzustellen. Eine weitere Aufgabe der Erfindung ist es, eine Steuereinheit zum Steuern des Verfahrens, ein Computerprogramm zur Durchführung des Verfahrens und ein maschinenlesbares Speichermedium für das Computerprogramm bereitzustellen. Eine weitere Aufgabe der Erfindung ist es, eine stationäre Einheit, eine bewegliche Einheit und ein lineares Transportsystem zur Umsetzung des Verfahrens bereitzustellen.

Diese Aufgaben werden durch das Verfahren zum Übertragen von Daten in einem linearen Transportsystem, die Steuereinheit, das Computerprogramm, das maschinenlesbare Speichermedium, die stationäre Einheit, die bewegliche Einheit sowie das lineare Transportsystem der unabhängigen Patentansprüche gelöst. Vorteilhafte Weiterbildungen sind in den abhängigen Patentansprüchen angegeben.

Ein lineares Transportsystem umfasst mehrere stationäre Einheiten und zumindest eine bewegliche Einheit sowie eine Führungsschiene zum Führen der beweglichen Einheit, eine Steuereinheit und einen Linearmotor zum Antreiben der beweglichen Einheit entlang der Führungsschiene. Der Linearmotor umfasst einen Stator und einen Läufer, wobei der Stator die stationären Einheiten umfasst, welche jeweils eine oder mehrere Antriebsspulen umfassen. Der Läufer ist an der beweglichen Einheit angeordnet und umfasst einen oder mehrere Magnete. Die stationären Einheiten weisen jeweils mindestens eine stationäre Antenne auf. Die bewegliche Einheit weist eine bewegliche Antenne auf. Die bewegliche Antenne ist an der beweglichen Einheit fixiert, kann sich jedoch zusammen mit der beweglichen Einheit entlang der Führungsschiene bewegen. In einem Verfahren zum Übertragen von Daten zwischen der beweglichen Einheit und der stationären Einheit des linearen Transportsystems werden die folgenden Schritte durch die Steuereinheit durchgeführt. Zunächst werden Positionsdaten der beweglichen Antenne der beweglichen Einheit ermittelt. Anschließend wird anhand der Positionsdaten der beweglichen Antenne diejenige stationäre Antenne innerhalb des linearen Transportsystems ausgewählt, die der beweglichen Antenne am nächsten ist. Daran Anschließend wird ein Datenpaket an die stationäre Einheit ausgegeben. Das Datenpaket umfasst ein Steuersignal, wobei das Steuersignal eine Identifikationsinformation beinhaltet, mit der die ausgewählte stationäre Antenne identifiziert werden kann. Ferner umfasst das Datenpaket ein über die ausgewählte stationäre Antenne zu übertragendes Datensignal, wobei das Datensignal eine Startsequenz beinhaltet. Die Startsequenz ist eingerichtet, einen Datenempfang der beweglichen Einheit zu triggern. Anschließend an die Startsequenz umfasst das Datensignal einen ersten Kommunikationsframe, wobei der erste Kommunikationsframe ein Startbit und zu übertragende Nutzdaten umfasst. Der erste Kommunikationsframe umfasst einen Zeitstempel. Dadurch kann eine Synchronisierung einer auf der beweglichen Einheit angeordneten Uhr ermöglicht werden.

Durch die Identifikationsinformation kann diejenige stationäre Antenne innerhalb des linearen Transportsystems ausgewählt werden, die der beweglichen Antenne der beweglichen Einheit am nächsten ist. Dadurch wird eine effiziente Datenübertragung mit möglichst geringen Störungen ermöglicht. Mittels der Startsequenz des Datensignals wird der Datenempfang der beweglichen Einheit getriggert. Dies bedeutet, dass die bewegliche Einheit mittels der beweglichen Antenne empfängt und bei Empfang der Startsequenz die Übertragung erkennt. Das Datenpaket kann dabei von einer Steuereinheit an eine stationäre Einheit ausgegeben werden. Dies kann mittels einer Datenübertragung zwischen der Steuereinheit und der stationären Einheit erfolgen. Es kann vorgesehen sein, dass die stationäre Einheit nur eine stationäre Antenne beinhaltet. In diesem Fall wird diese stationäre Antenne ausgewählt. Umfasst die stationäre Einheit mehrere stationäre Antennen, kann mittels der Identifikationsinformation eine der stationären Antennen ausgewählt werden.

Es kann vorgesehen sein, dass das lineare Transportsystem einen Feldbus umfasst, wobei die Steuereinheit und die stationären Einheiten Busteilnehmer sind und eine Kommunikation zwischen der Steuereinheit und den stationären Einheiten über den Feldbus erfolgt. Hierzu kann ein Feldbusprotokoll, ein Busmaster und Slaves vorgesehen sein.

In einer Ausführungsform des Verfahrens umfasst die Startsequenz mehrere Schaltflanken sowie mindestens drei invertierte Stop-Bits. Eine solche Startsequenz, welches grundsätzlich auf dem UART-Standard basiert, jedoch modifiziert ist, ist für eine Kommunikation zu einer beweglichen Einheit besonders gut geeignet. Die Startsequenz kann dabei den dezimalen Bytewert 85 umfassen.

In einer Ausführungsform des Verfahrens umfasst der erste Kommunikationsframe erste Kopfdaten, wobei die ersten Kopfdaten Informationen über einen Telegrammtyp enthalten, wobei der erste Kommunikationsframe anhand des Telegrammtyps eingestellt wird. Dadurch kann der beweglichen Einheit mitgeteilt werden, welche Art von Kommunikation im ersten Kommunikationsframe stattfinden soll und festgelegt werden, wie die übertragenen Daten von der beweglichen Einheit interpretiert werden.

In einer Ausführungsform des Verfahrens umfasst der Telegrammtyp eine Empfangsinformation eines zweiten Kommunikationsframes. Dadurch kann die stationäre Einheit angewiesen werden, nach dem Aussenden des Datensignals im ersten Kommunikationsframe Daten von der beweglichen Einheit zu empfangen. Die bewegliche Einheit wiederum kann durch die im vorherigen ersten Kommunikationsframe 341 empfangene Empfangsinformation angewiesen werden, im zweiten Kommunikationsframe Daten auszusenden.

In einer Ausführungsform des Verfahrens umfasst der Telegrammtyp eine Länge des ersten Kommunikationsframes. Die Empfangsinformation umfasst eine Länge des zweiten Kommunikationsframes. Dadurch kann die Kommunikation zwischen beweglicher Einheit und stationärer Einheit genauer gesteuert werden. Dem jeweiligen Empfänger einer Kommunikation ist dann genau bekannt, wie viele Daten er zu erwarten hat und wann eine Übertragung beendet ist, ohne eine spezielle Bitsequenzen an einem Ende der Übertragung empfangen zu müssen. Dadurch kann Übertragungszeit eingespart werden. Ferner ist vorteilhaft, wenn über die Informationen in den ersten Kopfdaten des ersten Kommunikationsframes auch die Länge des zweiten Kommunikationsframes enthalten ist und von der beweglichen Einheit nicht mit zu langen Daten geantwortet werden kann, welche beispielsweise zu Zykluszeitverletzungen führen könnten.

In einer Ausführungsform des Verfahrens dauert ein Kommunikationszyklus, bestehend aus dem ersten Kommunikationsframe, einer Umschaltpause und dem zweiten Kommunikationsframe eine vorgegebene Zeitspanne, beispielsweise maximal 250 Mikrosekunden. Dadurch kann erreicht werden, dass sich die bewegliche Einheit innerhalb eines Kommunikationszyklus nicht derart weit bewegen kann, dass die mittels der Identifikationsinformation ausgewählte stationäre Antenne nicht mehr mit der beweglichen Antenne kommunizieren kann. Dies ist deshalb der Fall, da bei einer vorgegebenen maximalen Geschwindigkeit der beweglichen Einheit, beispielsweise von 4 Metern pro Sekunde, die bewegliche Einheit sich innerhalb von 250 Mikrosekunden einen Millimeter bewegt. In diesem Fall hat sich die bewegliche Einheit noch nicht aus einem Einflussbereich der ausgewählten stationären Antenne bewegt. Um die vorgegebene Zeitspanne einzuhalten kann es vorgesehen sein, beispielsweise eine maximale Anzahl von zu übertragenen Bytes im ersten Kommunikationsframe beziehungsweise zweiten Kommunikationsframe festzulegen.

In einer Ausführungsform des Verfahrens umfasst der Telegrammtyp eine Information über eine Art von zu übertragenen Nutzdaten. Dadurch kann beispielsweise die bewegliche Einheit angewiesen werden, bestimmte Daten zu übertragen.

In einer Ausführungsform des Verfahrens umfassen die ersten Kopfdaten eine Adresse der beweglichen Einheit. Dies ermöglicht, insbesondere wenn innerhalb des linearen Transportsystems mehrere bewegliche Einheiten vorhanden sind, eine Adressierung. Dadurch wird es möglich, dass bewegliche Einheiten zwar ein Datensignal empfangen, aufgrund einer falschen Adresse, also einer Adresse, die nicht dieser speziellen beweglichen Einheit zugewiesen ist, die empfangene Kommunikation jedoch zu verwerfen.

In einer Ausführungsform des Verfahrens beinhalten die ersten Kopfdaten eine Kommunikationssteuerungsinformation. In einer Ausführungsform des Verfahrens umfassen die ersten Kopfdaten Werte zur Durchführung einer zyklischen Redundanzprüfung. Dadurch kann überprüft werden, ob die Kommunikation vollständig und fehlerfrei erfolgt ist.

In einer Ausführungsform des Verfahrens wird ein erstes Datenpaket an die eine der stationären Einheiten ausgegeben und anhand des ersten Datenpakets erfolgt eine Kommunikation zwischen der stationären Einheit und einer beweglichen Einheit. Ein zweites Datenpaket wird an dieselbe oder eine andere stationäre Einheit ausgegeben und anhand des zweiten Datenpakets erfolgt eine Kommunikation zwischen der stationären Einheit und einer beweglichen Einheit, wobei sich die beweglichen Einheiten unterscheiden.

Eine Steuereinheit ist eingerichtet, eines der erfindungsgemäßen Verfahren auszuführen. Dazu ist die Steuereinheit insbesondere eingerichtet, das Datenpaket zu erstellen und an eine stationäre Einheit auszugeben, insbesondere über eine Kommunikationsschnittstelle. Dabei kann zwischen der Steuereinheit und den stationären Einheiten ein Verteiler angeordnet sein.

Ein Computerprogramm umfasst Programmcode, welcher ausgeführt auf einem Computer diesen dazu veranlasst, das erfindungsgemäße Verfahren auszuführen. Ein solches Computerprogramm kann innerhalb der Steuereinheit gespeichert sein. Ein maschinenlesbares Speichermedium kann das Computerprogramm umfassen.

Die Erfindung umfasst ferner eine stationäre Einheit eines linearen Transportsystems. Die stationäre Einheit umfasst einen Stator mit einer oder mehreren Antriebsspulen zum Antrieb eines Läufers. Außerdem umfasst die stationäre Einheit eine oder mehrere stationäre Antennen. Die stationäre Einheit ist eingerichtet, ein Datenpaket zu empfangen, beispielsweise von der Steuereinheit. Das Datenpaket beinhaltet ein Steuersignal umfassend eine Identifikationsinformation, mit der eine stationäre Antenne anhand einer Position einer beweglichen Antenne einer beweglichen Einheit identifiziert werden kann und ein zu übertragendes Datensignal. Die stationäre Einheit ist eingerichtet, anhand der Identifikationsinformation diejenige stationäre Antenne auszuwählen, die der beweglichen Antenne am nächsten ist, und das Datensignal über die stationäre Antenne zu senden. Das Datensignal beinhaltet eine Startsequenz und ein an die Startsequenz anschließendes Startbit. Das Datensignal umfasst einen an die Startsequenz anschließenden ersten Kommunikationsframe, wobei der erste Kommunikationsframe das Startbit, zu übertragende Nutzdaten und einen Zeitstempel umfasst.

In einer Ausführungsform umfasst das Datensignal erste Kopfdaten, wobei die ersten Kopfdaten ebenfalls dem ersten Kommunikationsframe zugeordnet sind.

In einer Ausführungsform ist die stationäre Einheit ferner eingerichtet, eine Empfangsinformation eines zweiten Kommunikationsframes auszuwerten und anhand der Empfangsinformation den zweiten Kommunikationsframe zu empfangen.

In einer Ausführungsform ist die stationäre Einheit eingerichtet, mehrere Datenpakete zu empfangen, wobei jedes Datenpaket ein Steuersignal umfasst, so dass über mehrere stationäre Antennen gleichzeitig gesendet werden kann.

In einer Ausführungsform ist die stationäre Einheit ferner eingerichtet, die Startsequenz zu einem vorgegebenen Zeitpunkt anhand eines Synchronisationssignals auszugeben. Damit kann eine Synchronisation der beweglichen Einheit unterstützt werden. Die stationäre Einheit beinhaltet hierzu eine synchronisierte Uhr, wobei die synchronisierte Uhr mit der Steuereinheit synchronisiert ist.

Eine bewegliche Einheit eines linearen Transportsystems weist eine bewegliche Antenne auf. Ein Läufer ist an der beweglichen Einheit angeordnet und umfasst einen oder mehrere Magnete. Die bewegliche Einheit ist eingerichtet, ein Datensignal über die bewegliche Antenne von einer stationären Antenne zu empfangen. Das Datensignal beinhaltet eine Startsequenz und ein an die Startsequenz anschließendes Startbit. Das Datensignal umfasst ferner an das Startbit anschließende Nutzdaten, wobei die bewegliche Einheit eingerichtet ist, die Startsequenz zu identifizieren und anschließend die nach dem Startbit übertragenen Nutzdaten aufzuzeichnen. Die bewegliche Einheit ist ferner eingerichtet, eine Zeitsynchronisierung anhand der Startsequenz durchzuführen, wobei ein zusätzlich empfangener Zeitstempel verwendet wird.

In einer Ausführungsform ist die bewegliche Einheit ferner eingerichtet, in einem ersten Kommunikationsframe eine Empfangsinformation eines zweiten Kommunikationsframes zu empfangen und anhand der Empfangsinformation den zweiten Kommunikationsframe zu senden.

In einer Ausführungsform ist die bewegliche Einheit ferner eingerichtet, innerhalb des zweiten Kommunikationsframes eine Statusinformation zu senden.

Die Erfindung umfasst außerdem ein lineares Transportsystem mit einer erfindungsgemäßen Steuereinheit, mindestens einer erfindungsgemäßen stationären Einheit und mindestens einer erfindungsgemäßen beweglichen Einheit, wobei der Stator und der Läufer einen Linearmotor bilden.

Das bereits beschriebene lineare Transportsystem weist eine Steuereinheit, stationäre Einheiten sowie bewegliche Einheiten auf, wobei die stationären Einheiten jeweils mindestens eine stationäre Antenne aufweisen und die beweglichen Einheiten jeweils eine bewegliche Antenne aufweisen. Folgende Schritte werden dabei von der Steuereinheit ausgeführt. Zunächst werden Positionsdaten der beweglichen Antenne der zu initialisierenden beweglichen Einheit ermittelt. Anschließend wird mindestens eine stationäre Antenne einer der stationären Einheiten innerhalb des Transportsystems anhand der Positionsdaten der beweglichen Antenne ausgewählt. Dann wird ein Datenpaket an die stationäre Einheit ausgegeben, wobei das Datenpaket eine Initialisierungssequenz umfasst. Nun wird eine eindeutige Zuordnungsadresse der beweglichen Einheit festgelegt.

Ferner umfasst die Initialisierungssequenz eine Ticketnummer. Es werden mindestens zwei stationäre Antennen ausgewählt, wobei die bewegliche Antenne im Einflussbereich der beiden ausgewählten stationären Antennen angeordnet ist. Dies ist insbesondere dann sinnvoll, wenn mehrere bewegliche Antennen jeweils im Einflussbereich der stationären Antennen angeordnet sind, beispielsweise aufgrund eines Betriebszustandes des linearen Transportsystems, welcher nicht durch Positionsänderungen gestört werden soll. Ist eine eindeutige Zuordnung einer stationären Antenne zur beweglichen Antenne der beweglichen Einheit, die initialisiert werden soll, möglich, kann über die stationäre Antenne und ein vorgegebenes Kommando eine Adresse übertragen werden. Das Datenpaket umfasst eine Steuerinformation, derart, dass die Ticketnummer von jeder der beiden ausgewählten stationären Antennen mindestens einmal zu unterschiedlichen Zeitpunkten auszugeben ist. Es kann auch vorgesehen sein, mehrere Datenpakete für eine stationäre Einheit zu senden benachbarte Antennen von zwei stationären Einheiten anzusprechen.

Dieses Verfahren ermöglicht, die beweglichen Einheiten anhand der eindeutigen Zuordnungsadressen zu adressieren und dadurch eine Kommunikation zu steuern beziehungsweise festzulegen, welche der beweglichen Einheiten Empfänger einer Nachricht sein soll.

Die beiden ausgewählten stationären Antennen können dabei auf verschiedenen räumlichen Seiten der beweglichen Einheit angeordnet sein. Insbesondere in einem linearen Transportsystem können die stationären Antennen in einer Bewegungsrichtung auf verschiedenen Seiten der beweglichen Einheit angeordnet sein. Weitere, aktuell nicht zu initialisierende bewegliche Einheiten können ebenfalls im Einflussbereich einer der ausgewählten stationären Antennen angeordnet sein. Da jedoch nur die zu initialisierende bewegliche Einheit im Einflussbereich beider ausgewählter Antennen angeordnet ist, kann eine bewegliche Einheit anhand der Anzahl der empfangenen Ticketnummern feststellen, dass genau diese bewegliche Einheit aktuell initialisiert werden soll. Dies kann beispielsweise dadurch erfolgen, dass nach jedem Empfang einer Initialisierungssequenz mit der Ticketnummer ein Zähler in der beweglichen Einheit jeweils um eins erhöht, der Zähler mit einem vorgegebenen Wert verglichen und eine eindeutige Zuordnungsadresse ausgegeben wird, wenn der Zähler den vorgegebenen Wert übersteigt. Die eindeutige Zuordnungsadresse kann in diesem Fall eine bereits während der Produktion der beweglichen Einheit vergebene Identifikationsnummer sein.

Die Zuordnungsadresse kann beispielsweise eine Seriennummer der beweglichen Einheit sein, welche dann an die stationäre Einheit im Anschluss übertragen wird. Die Initialisierungssequenz mit der Ticketnummer kann alternativ gleichzeitig eine Adresse (beispielsweise eine von der Steuereinheit generierte Adresse) beinhalten, welche von der beweglichen Einheit empfangen und bei Erreichen des Zählerstandes übernommen wird. In diesem Fall kann die Adresse die stationäre Einheit beziehungsweise die Steuereinheit übertragen werden, wodurch eine Prüfung, ob die korrekte Adresse übertragen wurde, möglich ist.

In einer Ausführungsform des Verfahrens zum Initialisieren eines Transportsystems wird die Ticketnummer von jeder der ausgewählten stationären Antennen mehrfach ausgegeben. Dadurch können Auswirkungen von Übertragungsfehlern reduziert werden, wenn beispielsweise jede der ausgewählten stationären Antennen die Ticketnummer viermal überträgt und der vorgegebene Wert, mit dem der Zähler verglichen wird, sechs beträgt. Eine bewegliche Einheit, die initialisiert werden soll, muss dann nur sechs von acht Übertragungen der Ticketnummer korrekt empfangen. Eine bewegliche Einheit, die sich im Einflussbereich nur einer der ausgewählten stationären Antennen befindet, wird jedoch selbst ohne Übertragungsfehler nur vier Übertragungen der Ticketnummer empfangen, so dass der Zähler für eine solche bewegliche Einheit unter dem vorgegebenen Wert bleibt.

In einer Ausführungsform des Verfahrens zum Initialisieren eines Transportsystems werden zusätzlich Steuerbefehle für einen Antrieb des Transportsystems ausgegeben, beispielsweise für den Linearmotor des linearen Transportsystems. Anhand der Steuerbefehle kann ein Antrieb des Transportsystems derart gesteuert werden, dass die bewegliche Antenne der zu initialisierenden beweglichen Einheit in den Einflussbereich einer oder mehrerer stationärer Antennen bewegt wird. Der Antrieb umfasst einen Linearmotor bestehend aus einem Stator der stationären Einheiten sowie einem Läufer der beweglichen Einheit.

Dies ermöglicht, die Auswahl der stationären Antennen zu verbessern und ferner auch eine Initialisierung der beweglichen Einheit, bei der nur eine stationäre Antenne verwendet wird. In diesem Fall kann die zu initialisierende bewegliche Einheit in den Einflussbereich dieser stationären Antenne gebracht werden und alle anderen beweglichen Einheiten zu Positionen außerhalb des Einflussbereichs dieser stationären Antenne gebracht werden.

In einer Ausführungsform des Verfahrens zum Initialisieren eines Transportsystems erfolgt das Festlegen der eindeutigen Zuordnungsadresse der beweglichen Einheit derart, dass eine von der zu initialisierenden beweglichen Einheit über die bewegliche Antenne ausgesendete Zeichenfolge als eindeutige Zuordnungsadresse gespeichert wird. Diese Zeichenfolge kann eine bereits während der Produktion der beweglichen Einheit vergebene Zeichenfolge sein.

In einer Ausführungsform des Verfahrens zum Initialisieren eines Transportsystems wird anschließend eine 3-bit-Adresse an die stationäre Einheit ausgegeben, wobei die 3-bit-Adresse zur beweglichen Einheit übertragen werden soll. Diese 3-bit-Adresse kann der bereits beschriebenen 3-bit-Adresse in den ersten Kopfdaten entsprechen. Die bewegliche Einheit kann eingerichtet sein, die 3-bit-Adresse zu empfangen.

In einer Ausführungsform des Verfahrens zum Initialisieren eines Transportsystems erfolgt das Festlegen der eindeutigen Zuordnungsadresse derart, dass eine Zeichenfolge und eine 3-bit-Adresse von der Steuereinheit bestimmt und an die stationäre Einheit ausgegeben werden. Die Zeichenfolge und die 3-bit-Adresse sollen zur beweglichen Einheit übertragen werden. Dadurch kann eine Zeichenfolge für die bewegliche Einheit bestimmt werden, wenn während der Produktion der beweglichen Einheit keine Zeichenfolge vergeben worden ist. Ferner kann dieses Verfahren genutzt werden, um eine während der Produktion der beweglichen Einheit vergebene Zeichenfolge zu ersetzen.

In einer Ausführungsform des Verfahrens zum Initialisieren eines Transportsystems wird das Verfahren für eine weitere bewegliche Einheit wiederholt. Insbesondere wird das Verfahren für alle beweglichen Einheiten wiederholt.

Ferner kann ein Verfahren zum Initialisieren einer beweglichen Einheit in einem Transportsystem vorgesehen sein, wobei das Transportsystem eine Steuereinheit, stationäre Einheiten sowie bewegliche Einheiten umfasst. Die stationären Einheiten weisen jeweils mindestens eine stationäre Antenne auf. Die beweglichen Einheiten weisen jeweils eine bewegliche Antenne auf. Das Verfahren umfasst die folgenden, durch die bewegliche Einheit durchgeführten, Schritte. Zunächst wird eine Initialisierungssequenz mit einer Ticketnummer von einer ausgewählten stationären Antenne empfangen. Anschließend wird ein Zähler nach jedem Empfang der Initialisierungssequenz mit der Ticketnummer jeweils um eins erhöht. Anschließend wird der Zähler mit einem vorgegebenen Wert verglichen. Es wird eine eindeutige Zuordnungsadresse ausgesendet, wenn der Zähler den vorgegebenen Wert übersteigt.

In einer Ausführungsform des Verfahrens zum Initialisieren einer beweglichen Einheit in einem Transportsystem wird nach dem Aussenden der eindeutigen Zuordnungsadresse eine 3-bit-Adresse empfangen.

Die Erfindung wird nachfolgend anhand von Ausführungsbeispielen und unter Bezugnahme auf Figuren näher erläutert. Dabei zeigen jeweils in schematischer Darstellung.
- Fig. 1: ein lineares Transportsystem;
- Fig. 2: einen Ausschnitt aus dem linearen Transportsystem der Fig. 1;
- Fig. 3: eine seitliche Draufsicht auf den Ausschnitt des linearen Transportsystem der Fig. 2;
- Fig. 4: eine Anordnung von stationären Antennen in einer stationären Einheit sowie von einer beweglichen Antenne in einer beweglichen Einheit;
- Fig. 5: die Antennen der Fig. 4 während einer Bewegung der beweglichen Einheit;
- Fig. 6: eine Verschaltung der stationären Antennen und der beweglichen Antenne;
- Fig. 7: ein Datensignal;
- Fig. 8: ein modifiziertes Datensignal;
- Fig. 9: ein von der beweglichen Einheit empfangenes Datensignal;
- Fig. 10: einen Kommunikationsframe;
- Fig. 11: einen Kommunikationszyklus;
- Fig. 12: erste Kopfdaten;
- Fig. 13: zweite Kopfdaten;
- Fig. 14: eine schematische Ansicht einer stationären Einheit mit mehreren beweglichen Einheiten;
- Fig. 15: eine weitere schematische Ansicht einer stationären Einheit mit mehreren beweglichen Einheiten; und
- Fig. 16: eine schematische Übersicht der Kommunikation zwischen Steuereinheit, stationären Einheiten und einer beweglichen Einheit.

Im Folgenden können für gleiche Merkmale gleiche Bezugszeichen verwendet werden. Weiter kann es aus Gründen der Übersichtlichkeit vorgesehen sein, dass nicht jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

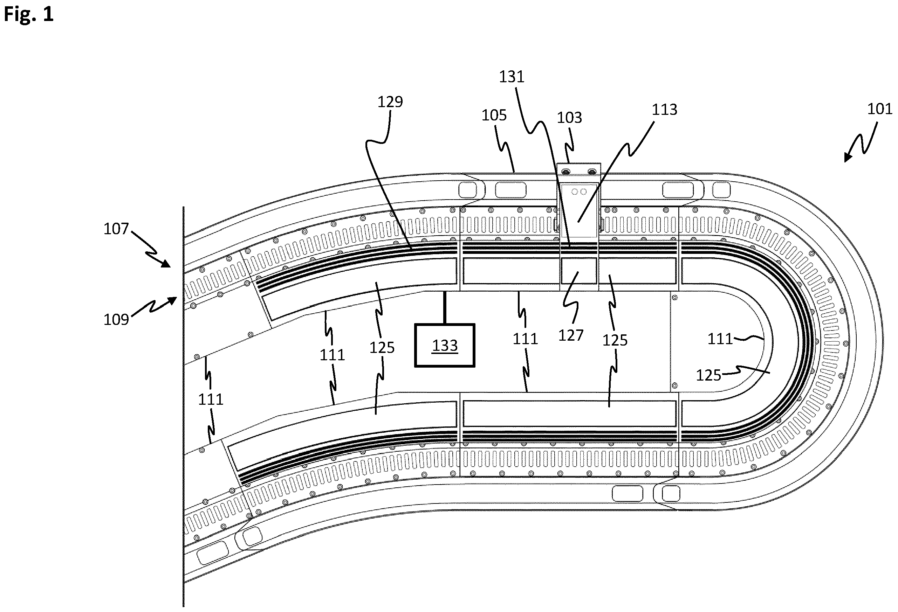

Fig. 1 zeigt ein lineares Transportsystem 101. Das lineare Transportsystem 101 umfasst eine bewegliche Einheit 103, die durch eine Führungsschiene 105 geführt ist. Die bewegliche Einheit 103 umfasst hier nicht dargestellte Laufrollen und einen Läufer 113 mit Magneten. Die Laufrollen der beweglichen Einheit 103 können dabei auf Laufflächen der Führungsschiene 105 rollen.

Das lineare Transportsystem 101 umfasst ferner einen Linearmotor 107, wobei der Linearmotor 107 einen Stator 109 aufweist. Der Stator 109 des Linearmotors 107 ist in den stationären Einheiten 111, die hierzu jeweils mehrere Antriebsspulen aufweisen. Dabei sind die stationären Einheiten 111 in Fig. 1 teilweise unterschiedlich ausgestaltet, wobei einzelne stationäre Einheiten 111 gerade oder gebogen sein können. Der Linearmotor 107 umfasst ferner den Läufer 113, der an der beweglichen Einheit 103 angeordnet ist und einen oder mehrere Magnete umfasst. Die stationären Einheiten 111 umfassen jeweils eine Energiesendespule 125. Die bewegliche Einheit 103 umfasst eine Energieempfangsspule 127. In einer in Fig. 1 nicht dargestellten alternativen Ausführungsform kann eine stationäre Einheit 111 auch mehrere Energiesendespulen 125 umfassen.

Die stationären Einheiten 111 umfassen ferner stationäre Antennen 129. Die bewegliche Einheit 103 umfasst eine bewegliche Antenne 131. Die bewegliche Antenne 131 ist an der beweglichen Einheit 103 fixiert, kann sich jedoch zusammen mit der beweglichen Einheit 103 entlang der Führungsschiene 105 bewegen. Mittels der stationären Antennen 129 und der beweglichen Antenne 131 können Daten zwischen den stationären Einheiten 111 und der beweglichen Einheit 103 ausgetauscht werden. Alternativ kann eine solche Datenübertragung jedoch auch beispielsweise mittels einer Wireless-LAN- oder einer Bluetooth- oder einer Infrarot-Verbindung oder einer 5G-Verbindung oder nach dem DECT-Standard oder als optische Übertragung ausgestaltet sein. Die stationäre Einheit 111 umfasst dann nicht die stationäre Antenne 129. Die bewegliche Einheit 103 umfasst dann nicht die bewegliche Antenne 131, jeweils wie in Fig. 1 gezeigt. Es können jedoch andere Antennen an der beweglichen Einheit 103 angeordnet sein. Die stationären Antennen und/oder die beweglichen Antennen können völlig unabhängig von der in Fig. 1 gezeigten Ausgestaltung angeordnet sein.

Das lineare Transportsystem 101 umfasst ferner eine Steuereinheit 133, die entweder mit einer der stationären Einheiten 111 oder mit allen stationären Einheiten 111 direkt verbunden ist. Dargestellt in Fig. 1 ist eine Verbindung zu einer der stationären Einheiten 111. In diesem Fall kann es vorgesehen sein, dass die stationären Einheiten 111 einen Kommunikationsbus umfassen, mit dem Signale von der Steuereinheit 133 zwischen den stationären Einheiten 111 ausgetauscht werden können. Ferner können weitere, in Fig. 1 nicht gezeigte, Kommunikationseinheiten zwischen der Steuerung 133 und der stationären Einheit 111 oder den stationären Einheiten 111 angeordnet sein.

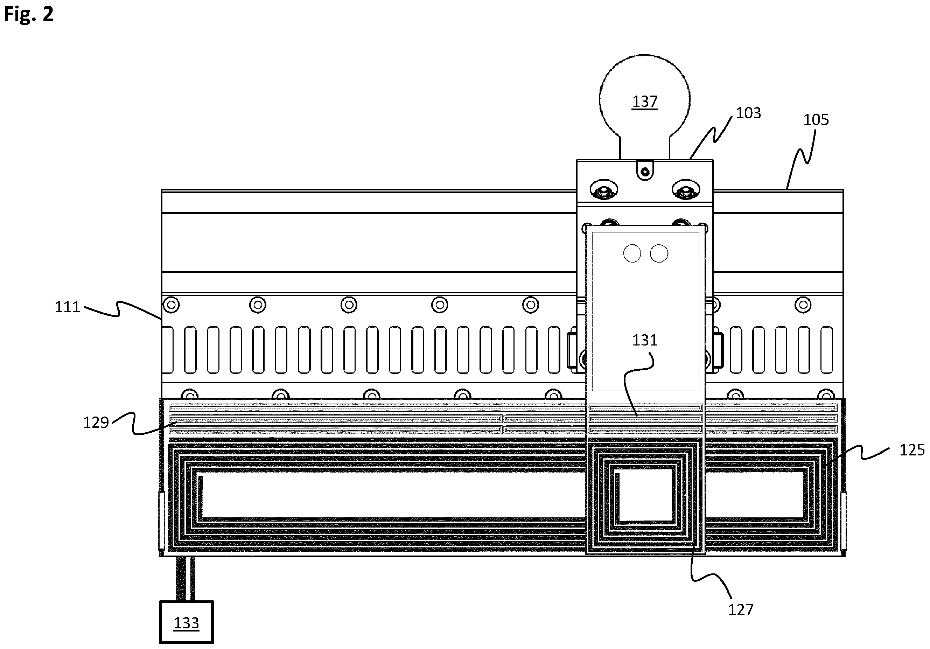

Fig. 2 zeigt eine detailliertere Ansicht einer stationären Einheit 111, an der eine bewegliche Einheit 103 angeordnet ist. Die bewegliche Einheit 103 umfasst ein Werkzeug 137, welches beispielsweise als elektrisches Werkzeug ausgestaltet sein kann. Um das Werkzeug 137 betreiben zu können, kann eine Energieübertragung von der stationären Einheit 111 zur beweglichen Einheit 103 notwendig sein. Dies kann über die Energiesendespule 125 der stationären Einheit 111 und die Energieempfangsspule 127 der beweglichen Einheit 103 erfolgen. Wird die Energiesendespule 125 bestromt, beispielsweise mit einem Wechselstrom, wird ein entsprechendes Magnetfeld erzeugt, welches in der Energieempfangsspule 127 einen Strom induziert. Dieser induzierte Strom kann dann verwendet werden, um das Werkzeug 137 der beweglichen Einheit 103 mit Energie zu versorgen. Ferner umfasst die stationäre Einheit 111 die stationäre Antenne 129 und die bewegliche Einheit 103 die bewegliche Antenne 131. Unabhängig davon kann die Art der Energieübertragung auch anders erfolgen, beispielsweise über eine andere Art der kontaktlosen Energieübertragung oder über Schleifringe. Eine Datenübertragung kann trotzdem mittels der stationären Antennen 129 und der beweglichen Antenne 131 erfolgen

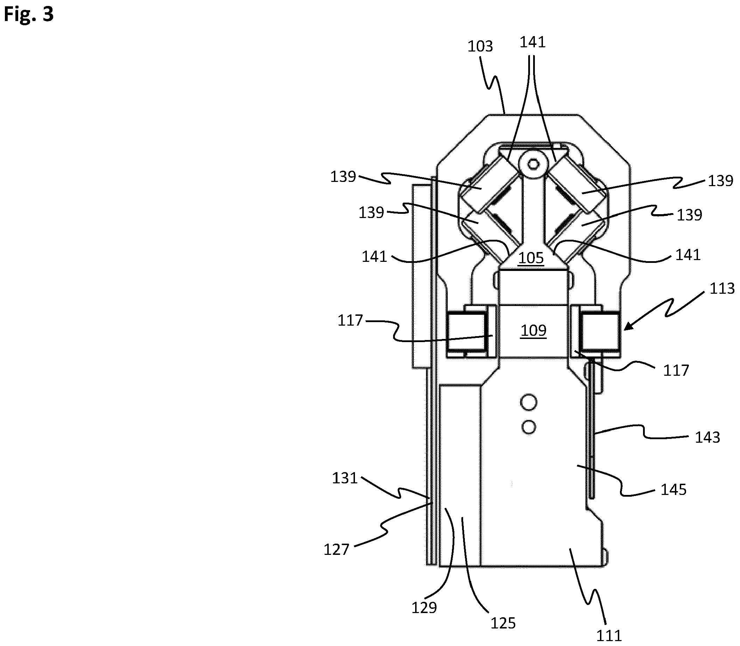

Fig. 3 zeigt eine seitliche Draufsicht auf eine stationäre Einheit 111, an der eine bewegliche Einheit 103 angeordnet ist. Laufrollen 139 der beweglichen Einheit 103 können auf Laufflächen 141 der Führungsschiene 105 abrollen und so eine im Wesentlichen eindimensionale Bewegung der beweglichen Einheit 103 entlang der Führungsschiene 105 ermöglichen. Ebenfalls in Fig. 3 dargestellt sind Magnete 117 der beweglichen Einheit 103, die den Läufer 113 des Linearmotors 107 bilden. Zusätzlich dargestellt ist der Stator 109 des Linearmotors 107, der aus nicht dargestellten Statorzähnen und Antriebsspulen gebildet wird. Unterhalb der Magnete 117 und des Stators 109 weist die bewegliche Einheit 103 ein Positionsdetektionselement 143 auf. Die stationäre Einheit 111 weist in diesem Bereich einen Positionssensor 145 auf. Der Positionssensor 145 kann beispielsweise ein durch ein im Positionsdetektionselement 143 eingebettetes Metallstück verändertes Induktionsverhalten einer Spule messen. Hierzu kann der Positionssensor 145 beispielsweise eine bestromte Spule aufweisen, bei der durch eine veränderte Induktion ein Vorbeifahren des Positionsdetektionselements 143 zu einer Veränderung des Stromes in der Spule führt und so die Position des Positionsdetektionselements 143 und damit der beweglichen Einheit 103 detektiert werden kann. Selbstverständlich kann der Positionssensor 145 jedoch auch anders ausgestaltet sein, beispielsweise mit jeweils einer Erreger- und Empfangsspule, mit der ebenfalls eine Induktivität des in das Positionsdetektionselement 143 eingebetteten Metallstücks gemessen wird. Ferner sind beispielsweise noch in das Positionsdetektionselement 143 eingebettete Magnete 117 oder eine Lichtschrankenauswertung zur Positionsbestimmung möglich.

In einem Verfahren zum Übertragen von Daten zwischen der stationären Einheit 111 und der beweglichen Einheit 103 des linearen Transportsystems 101 können von der Steuereinheit 133 folgende Schritte durchgeführt werden: Zunächst werden die Positionsdaten der beweglichen Antenne 129 der beweglichen Einheit 103 ermittelt. Diese Positionsdaten der beweglichen Antenne 129 können eine Position der beweglichen Einheit 103 relativ zu den stationären Einheiten 111 des linearen Transportsystems 101 umfassen. Dabei kann es vorgesehen sein, die Positionsdaten mittels des Positionssensors 145 zu ermitteln. Anschließend wird eine der stationären Antennen 129 ausgewählt. Es kann dabei vorgesehen sein, die stationäre Antenne 129 derart auszuwählen, dass sie der beweglichen Antenne 131 der beweglichen Einheit 103 gegenüberliegt. Anschließend wird ein Datenpaket an die stationäre Einheit 111 ausgegeben, wobei das Datenpaket ein Steuersignal umfasst. Das Steuersignal beinhaltet eine Identifikationsinformation, mit der die stationäre Antenne 129 identifiziert werden kann. Ferner umfasst das Datenpaket ein über die stationäre Antenne 129 zu übertragendes Datensignal, wobei das Datensignal eine Startsequenz und einen an die Startsequenz anschließenden ersten Kommunikationsframe umfasst. Die Startsequenz ist eingerichtet, einen Datenempfang der beweglichen Einheit 103 zu triggern. Der erste Kommunikationsframe umfasst ein Startbit und zu übertragende Nutzdaten.

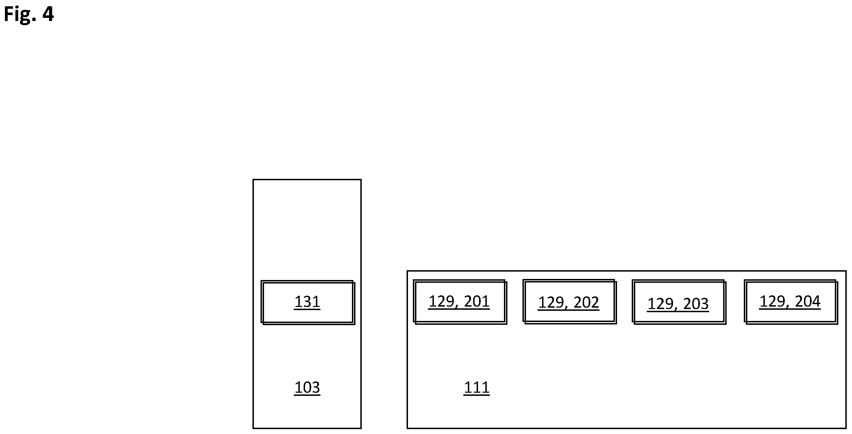

Fig. 4 zeigt eine schematische Ansicht von vier stationären Antennen 129 einer stationären Einheit 111 sowie einer beweglichen Antenne 131 einer beweglichen Einheit 103, die jeweils wie in den Fig. 1 bis 3 beschrieben ausgestaltet sein können. Die stationäre Einheit 111 weist eine erste stationäre Antenne 201, eine zweite stationäre Antenne 202, eine dritte stationäre Antenne 203 sowie eine vierte stationäre Antenne 204 auf, die jeweils hintereinander angeordnet sind. Hintereinander bedeutet in diesem Zusammenhang, dass wenn sich die bewegliche Einheit 103 entlang der Führungsschiene 105 bewegt, die bewegliche Antenne 131 zunächst an der ersten stationären Antenne 201, dann an der zweiten stationären Antenne 202, danach an der dritten stationären Antenne 203 und zuletzt an der vierten stationären Antenne 204 vorbeibewegt wird. Es kann auch eine andere Anzahl von stationären Antennen 129 vorgesehen sein, die Anzahl der stationären Antennen 129 für jede stationäre Einheit 111 ist nicht auf vier beschränkt.

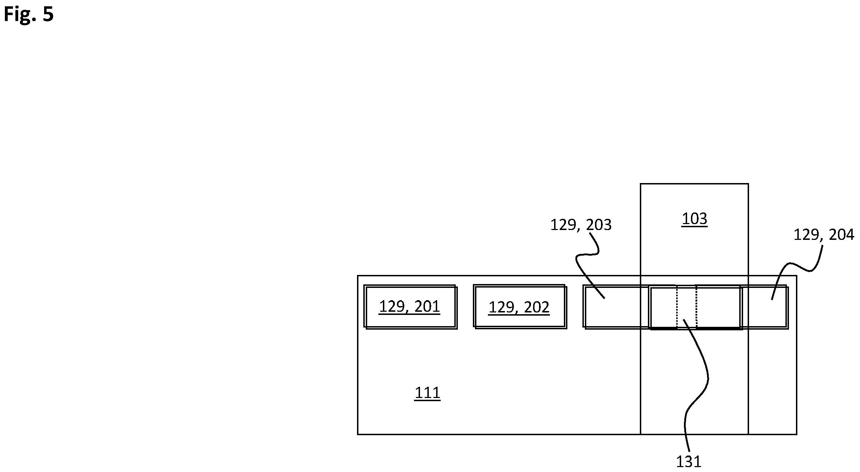

Fig. 5 zeigt die stationären Antennen 129 der stationären Einheit 111 sowie der beweglichen Antenne 131 der beweglichen Einheit 103 der Fig. 4 während einer solchen Bewegung. Die bewegliche Einheit 103 ist bereits im Bereich der vierten stationären Antenne 204 angelangt. Anhand der Positionsdaten der beweglichen Einheit 103, die beispielsweise mittels des Positionssensors 145 oder aus der Bestromung der Antriebsspulen ermittelt werden kann, wird die vierte stationäre Antenne 204 für die Übertragung ausgewählt. Das an die stationäre Einheit 111 ausgegebene Datenpaket enthält als Steuersignal die Identifikationsinformation mit der die vierte stationäre Antenne 204 identifiziert werden kann. Dadurch wird erreicht, dass das Datensignal mittels der vierten stationären Antenne 204 auf die bewegliche Einheit 103 übertragen wird. Anhand der Position der beweglichen Einheit 103 kann erkannt werden, dass die vierte stationäre Antenne 204 die optimale funktionelle Wechselwirkung mit der beweglichen Antenne 131 besitzt. Alternativ oder zusätzlich kann mittels der Position, der Geschwindigkeit und einer bekannten Totzeit des Systems ermittelt werden, dass zum effektiven Sendezeitpunkt die vierte stationäre Antenne 204 die optimale funktionelle Wechselwirkung mit der beweglichen Antenne 131 haben wird.

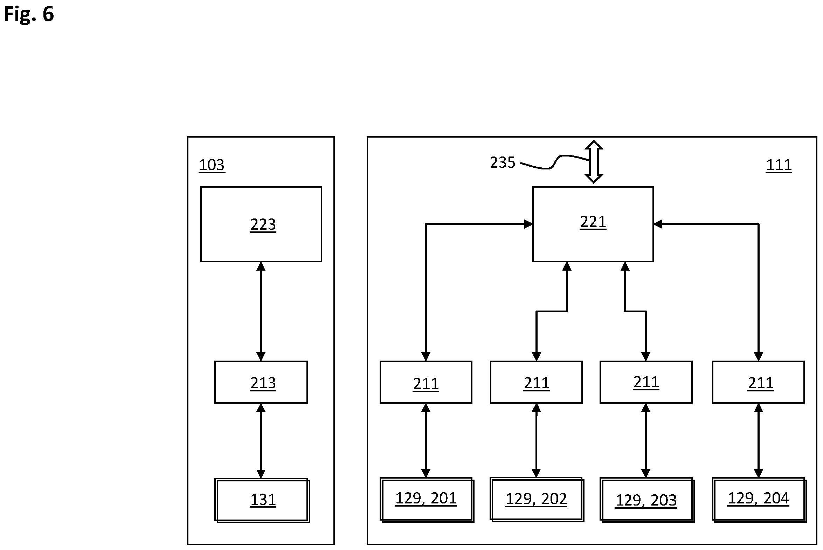

Fig. 6 zeigt schematisch, wie die stationären Antennen 129 der Fig. 4 und 5 innerhalb der stationären Einheit 111 verschalten sind sowie wie die bewegliche Antenne 131 innerhalb der beweglichen Einheit 103 verschaltet ist. Die stationäre Einheit weist vier erste Chips 211 zur drahtlosen Übertragung auf, die jeweils mit einer der stationären Antennen 129 verbunden sind. Sind mehr oder weniger stationäre Antennen 129 vorhanden, kann auch die Zahl der ersten Chips 211 zur drahtlosen Übertragung angepasst werden. Die ersten Chips 211 sind mit einem ersten Mikrocontroller 221 verbunden. Mittels des ersten Mikrocontrollers 221 können die ersten Chips 211 zur drahtlosen Übertragung angesteuert werden und dadurch erreicht werden, dass das Datensignal über eine der stationären Antennen 129 ausgegeben wird. Hierzu verfügt der erste Mikrocontroller 221 über eine Kommunikationsschnittstelle 235, mit der der erste Mikrocontroller 221 das Datenpaket von der Steuereinheit 133 empfangen kann. Anhand des Steuersignals des Datenpakets kann der Mikrocontroller 221 den ersten Chip 211, mit dem die Übertragung stattfinden soll, auswählen. Die Kommunikationsschnittstelle 235 kann beispielsweise eine EtherCAT-Schnittstelle sein. Die bewegliche Einheit 103 umfasst die bewegliche Antenne 131 sowie einen zweiten Chip 213 zur drahtlosen Übertragung und einen zweiten Mikrocontroller 223. Über die bewegliche Antenne 131 kann das Datenpaket empfangen werden. Mittels des zweiten Chips 213 zur drahtlosen Übertragung wird das Datenpaket an den zweiten Mikrocontroller 223 weitergegeben. Von dort können Daten an das Werkzeug 137 weitergegeben werden. Der erste Mikrocontroller 221 beziehungsweise der zweite Mikrocontroller 223 kann alternativ als Steuereinheit oder Controller ausgestaltet sein. Der erste Chip 211 beziehungsweise der zweite Chip 213 können als RFID-Chips ausgestaltet sein.

Die Kommunikation zwischen der stationären Einheit 111 und der beweglichen Einheit 103 ist voll-duplex fähig, es können also sowohl Daten von der stationären Einheit 111 zur beweglichen Einheit 103 als auch von der beweglichen Einheit 103 zur stationären Einheit 111 übertragen werden.

Eine Stromversorgung von beweglicher Antenne 131, zweiten Chip 213, zweitem Mikrocontroller 223 sowie Werkzeug 137 kann über die in den Fig. 1 bis 3 gezeigte Energiesendespule 125 beziehungsweise Energieempfangsspule 127 erfolgen. Es kann vorgesehen sein, dass die bewegliche Einheit 103 einen Energiespeicher aufweist, wobei der Energiespeicher als Kondensator, Akkumulator, Batterie, Supercap bzw. Superkondensator, supraleitender magnetischer Energiespeicher oder als Schwungrad ausgestaltet sein kann. Dadurch kann Energie gespeichert werden, beispielsweise um für Aktionen des Werkzeugs 137, die kurzfristig eine höhere Leistung benötigen, als mittels der Energiesendespule 125 bereitgestellt werden kann. Eine größere Energiemenge kann so längerfristig vorab übertragen werden und in dem Energiespeicher zwischen gespeichert werden. Außerdem kann so Energie gespeichert werden um größere Bereiche ohne Energieübertragung zu überbrücken und dort trotzdem eine Kommunikation mittels der beweglichen Antenne 131 aufrecht erhalten zu können oder um eine Aktion des Werkzeugs 137 dort auszuführen. Es können auch ausschließlich Energiespeicher zur Energieversorgung der beweglichen Einheit 103 vorgesehen sein und die Energiesendespulen 125 beziehungsweise Energieempfangsspulen 127 können weggelassen werdne.

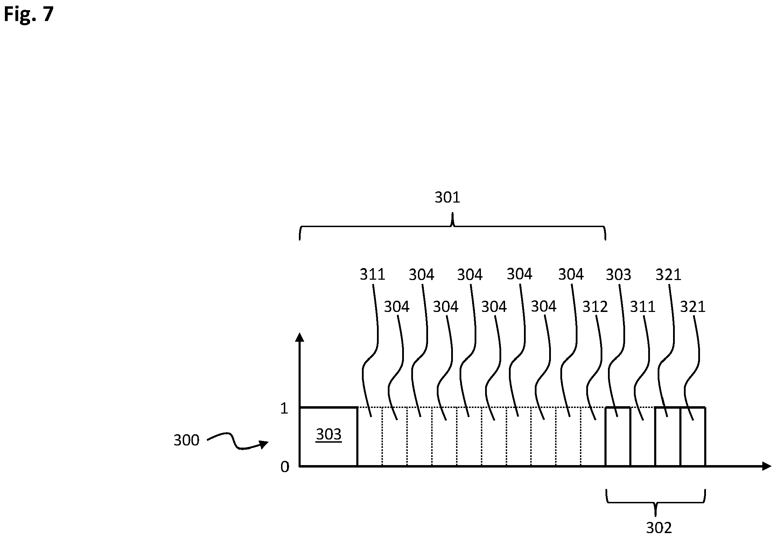

Fig. 7 zeigt ein Datensignal 300, welches vor der stationären Einheit 111 zur beweglichen Einheit 103 übertragen werden kann. Das Datensignal 300 umfasst eine Startsequenz 301 und Nutzdaten 302. Das Datensignal 300 kann dabei dem aus dem Stand der Technik bekannten UART-Standard entsprechen, bei dem ein Übertragungskanal auf einer logischen 1 gehalten wird, wenn gerade keine Datenübertragung stattfindet (Idle 303). Ein Startbit 311 ist als Übertragung einer logischen 0 nach dem Idle 303 ausgestaltet. Anschließend werden weitere Nullbits 304 übertragen, bis nach dem UART-Standard wieder ein Stopp-Bit mit einer logischen 1 übertragen werden müsste. Dieses Stopp-Bit wird jedoch durch ein invertiertes Stop-Bit 312 ersetzt, also weiter eine logische 0 ausgegeben. Dadurch kann einem Empfänger, hier der beweglichen Einheit 103 der Beginn einer neuen Datenübertragung signalisiert werden. Nach einem weiteren Idle 304 und einem weiteren Startbit 311 beginnt die Übertragung der Nutzdaten 302, indem Nutzdatenbits 321 übertragen werden. In Fig. 7 sind zwei Nutzdatenbits 321 in den Nutzdaten 302 gezeigt, wobei jedoch auch die Übertragung von mehr als zwei Nutzdatenbits 321 möglich ist, bis hin zu mehreren Bytes.

Durch das Senden des Startbits 311 nach dem Idle 303 kann jeweils eine definierte Startzeit für eine Übertragung gewählt werden. Empfängt die bewegliche Einheit 103 ein entsprechendes Startbit 311 nach Idle 303, so kann die bewegliche Einheit 103 angewiesen werden Daten zu empfangen. Mittels dem invertierten Stop-Bit 312 kann der beweglichen Einheit 103 der Beginn der Übertragung der Nutzdaten 302 mitgeteilt werden.

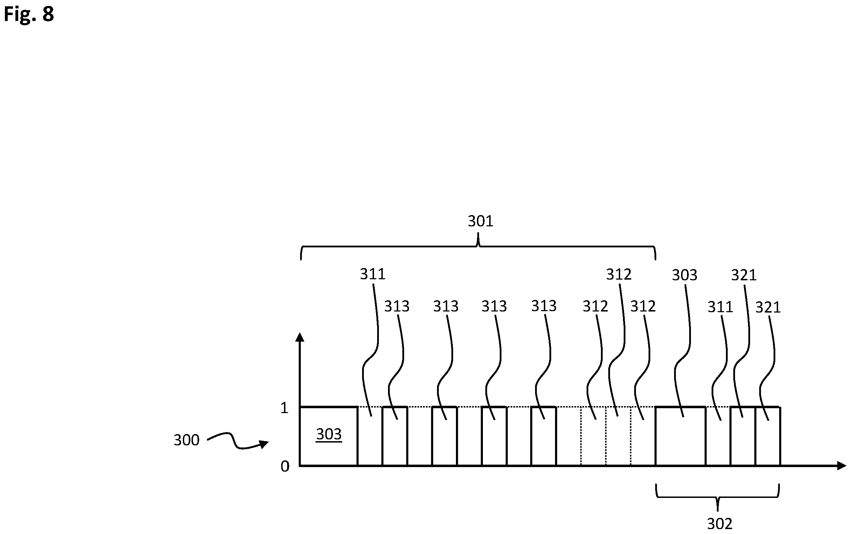

Fig. 8 zeigt ein modifiziertes Datensignal 300, welches dem Datensignal der Fig. 7 entspricht, sofern im Folgenden keine Unterschiede beschrieben sind. Anstelle mehrerer Nullbits 304 wird eine Sequenz mit mehreren Schaltflanken 313 übertragen. Die Schaltflanken 313 dienen dazu, dass der Empfänger einer Datenübertragung die Frequenzmodulationen der logischen 1 und der logischen 0 in Bezug auf eine wahrgenommene Trägerfrequenz beziehungsweise auf aktuelle Umstände erlernen kann. Je nach Position schwankt beispielsweise seine wahrgenommene Amplitude der Trägerfrequenz und die Schaltflanken 313 dienen dazu, sich an die logischen Pegel anzupassen. Eine Polaritätserkennung ist eine Folge aus diesem Prozess. Dadurch kann in der beweglichen Einheit die logische 0 und die logische 1 besser identifiziert werden. Die Schaltflanken 313 können dabei so ausgestaltet sein, dass die Startsequenz 301 den dezimalen Bytewert 85 umfasst. Dies ist dadurch umgesetzt, dass nach dem Startbit 311 abwechselnd logisch 1 und logisch 0 gesendet wird mit insgesamt viermal dem Wert 1 und viermal dem Wert 0. Ferner ist das invertierte Stop-Bit 312 dreimal vorhanden. Hintergrund dieser Vorgehensweise ist, dass die bewegliche Einheit 103 genügend Schaltflanken 313 empfangen kann, um eine Polarität zu erkennen, also welche Bits mit logisch 0 und welche mit logisch 1 übertragen werden. Dies ist in einem linearen Transportsystem 101 aufgrund der möglichen Bewegung der beweglichen Einheit 103 und der deshalb notwendigen drahtlosen Übertragung vorteilhaft.

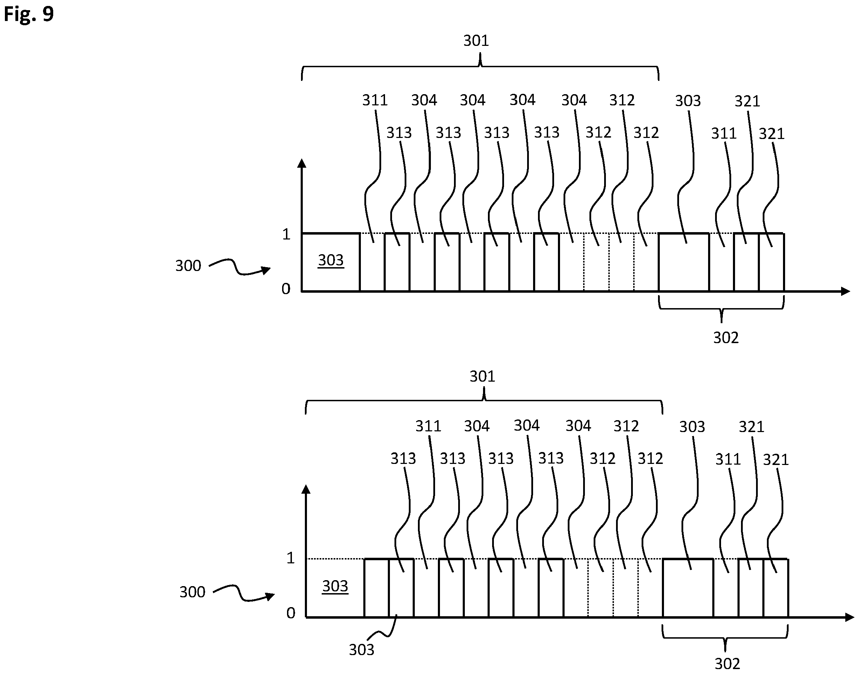

Fig. 9 zeigt das von der beweglichen Einheit 103 empfangene Datensignal 300. Die obere Darstellung der Fig. 9 entspricht dem Fall, dass die Polarität korrekt interpretiert wird (also so wie in Fig. 8 gesendet). Die untere Darstellung der Fig. 9 entspricht dem Fall, dass die Polarität falsch interpretiert wird. Hier wird das erste Bit des dezimalen Bytewerts 85 als Idle 303 interpretiert. Aufgrund der anschließenden Schaltflanken 313 ist jedoch eine Erkennung der Polarität möglich. In diesem Fall werden jedoch zwei der drei invertierten Stop-Bits 312 nicht als solche interpretiert, sondern als normale Bits wahrgenommen, so dass erst das dritte invertierte Stop-Bit 312 erkannt wird und damit die Identifikation der Startsequenz 301 erfolgt.

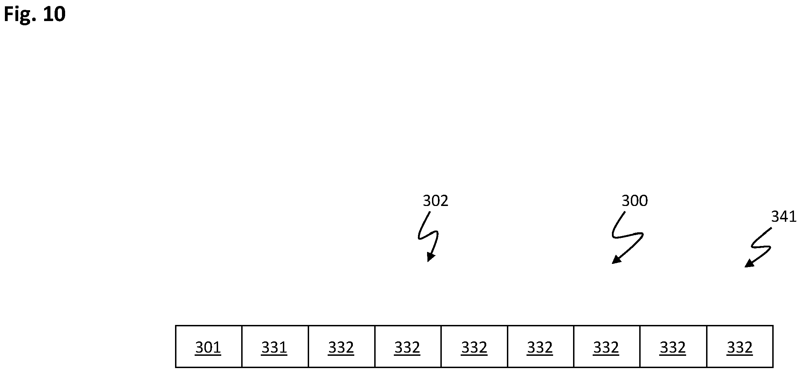

Fig. 10 zeigt ein Datensignal 300, welches einen ersten Kommunikationsframe 341 bildet. Das Datensignal 300 besteht aus der oben beschriebenen Startsequenz 301 und Nutzdaten 302. Die Nutzdaten 302 weisen dabei ein erstes Byte 331 und mehrere zweite Bytes 332 auf. Innerhalb des ersten Bytes 331 werden Informationen über die Kommunikation übertragen. Die zweiten Bytes 332 stehen ausschließlich für die Datenübertragung zur Verfügung. Insbesondere kann das erste Byte 331 eine Information über eine Länge des ersten Kommunikationsframes 341 enthalten.

Nach der Übertragung der Startsequenz 301 von der stationären Einheit 111 auf die bewegliche Einheit 103 kann mit der Übertragung der Nutzdaten 302 begonnen werden. Im ersten Byte 331 wird übertragen, wie viele Bits oder Bytes die Übertragung umfasst, so dass die bewegliche Einheit 103 solange Daten empfängt, bis die Anzahl der Bits beziehungsweise Bytes erreicht ist. Hierzu kann auch die Übertragung von mehr als einem ersten Byte 331 vorgesehen sein. Insbesondere kann im ersten Byte 331 übertragen werden, dass eine vorgegebene Anzahl von Bytes übertragen wird. Anschließend werden die zweiten Bytes 332 übertragen, wobei die Anzahl der zweiten Bytes 332 und die Anzahl der ersten Bytes 331 (in Fig. 10 eines) zusammen die vorgegebene Anzahl ergeben.

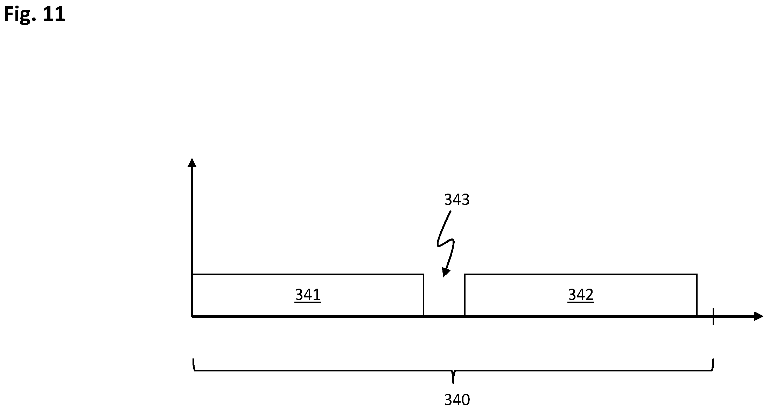

Fig. 11 zeigt einen Kommunikationszyklus 340 bestehend aus einem ersten Kommunikationsframe 341, der dem ersten Kommunikationsframe 341 der Fig. 10 entsprechen kann, einem zweiten Kommunikationsframe 342 und einer Umschaltpause 343. Im ersten Kommunikationsframe 341 werden Daten von der stationären Einheit 111 zur beweglichen Einheit 103 übertragen. Die Länge der Übertragung kann dabei wie für Fig. 10 beschrieben festgelegt werden. Ebenfalls im ersten Byte 331 der Fig. 10 kann eine Länge einer Datenübertragung von der beweglichen Einheit 103 zur stationären Einheit 111, also des zweiten Kommunikationsframes 342, festgelegt werden. Im zweiten Kommunikationsframe 342 werden also Daten von der beweglichen Einheit 103 zur stationären Einheit 111 übertragen. Zwischen dem ersten Kommunikationsframe 341 und dem zweiten Kommunikationsframe 342 ist eine Umschaltpause 343 vorgesehen. In der Umschaltpause 343 wird der Kommunikationsmodus der stationären Antenne 129 der stationären Einheit 111 von Senden auf Empfangen umgeschaltet, während der Kommunikationsmodus der beweglichen Antenne 103 von Empfangen auf Senden umgeschaltet wird.

In einer Ausführungsform ist eine zeitliche Länge des ersten Kommunikationsframes 341 und des zweiten Kommunikationsframes 342 und der Umschaltpause 343 so abgestimmt, dass eine vollständige Übertragung innerhalb eines Steuerzyklus abgeschlossen ist. Ferner kann die Übertragung so abgestimmt sein, dass bei einer maximalen Geschwindigkeit der beweglichen Einheit 103 die gleiche stationäre Antenne 129 zum Empfang der Antwort genutzt werden kann. In einer weiteren Ausführungsform ist die Steuereinheit 133 dazu eingerichtet, eine auf einer anderen stationären Einheit 111 beziehungsweise einer anderen stationären Antenne 129 empfangenen Antwort der beweglichen Einheit 103 diese entsprechend zuzuordnen.

Es kann vorgesehen sein, dass der Kommunikationszyklus 340, bestehend aus dem ersten Kommunikationsframe 341, der Umschaltpause 343 und dem zweiten Kommunikationsframe 342 maximal 250 Mikrosekunden dauert. Dies ermöglicht eine Übertragung mit 4 Kilohertz. Ferner kann durch diese maximale Dauer des Kommunikationszyklus 340 erreicht werden, dass sich die bewegliche Antenne 131 der beweglichen Einheit 103 nicht während der Übertragung von der ausgewählten stationären Antenne 129 der stationären Einheit 111 wegbewegt und die komplette Übertragung mittels dieser zwei Antennen erfolgen kann. Alternativ kann eine Übertragung der Daten von der beweglichen Antenne 131 auch auf eine andere stationäre Antenne 129 erfolgen.

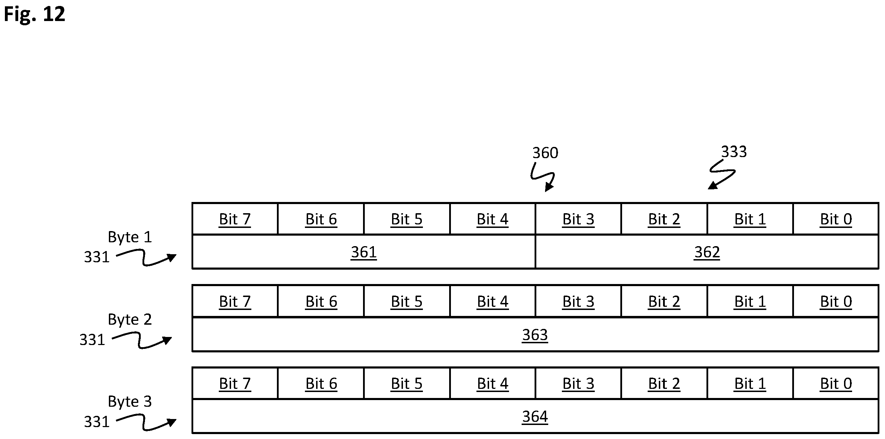

Fig. 12 zeigt drei erste Bytes 331, die zusammen erste Kopfdaten 333 bilden. Die ersten Kopfdaten 333 werden von der stationären Einheit 111 zur beweglichen Einheit 103 übertragen. Die ersten Kopfdaten 333 können als Header 360 der Datenübertragung aufgefasst werden. Die ersten Kopfdaten 333 bestehen aus einer 4-bit-Adresse 361, einem Telegrammtyp 362, einer Kommunikationssteuerungsinformation 363 und einer zyklischen Redundanzprüfung 364. Hierbei können jedoch auch einzelne Elemente der ersten Kopfdaten 333 weggelassen werden, andere Bitlängen aufweisen oder weitere, hier nicht aufgeführte Elemente aufweisen. Beispielsweise kann der Header 360 nur den Telegrammtyp 362 umfassen, wobei der Telegrammtyp 362 die Länge des ersten Kommunikationsframes 341 beziehungsweise des zweiten Kommunikationsframes 342 umfasst. Die ersten Kopfdaten 333 können dabei innerhalb des ersten Kommunikationsframes 341 übertragen werden.

Für jede bewegliche Einheit 103 des linearen Transportsystems 101 kann beispielsweise eine "lange" Adresse als 2 Byte Objekt (max. 65536 bewegliche Einheiten 103) und eine "kurze" Adresse im Header 360 festgelegt werden, wobei die kurze Adresse Teil der 4-bit-Adresse 361 ist. Die "kurze" Adresse muss "nur" eindeutig sein für alle beweglichen Einheiten 103 im Einflussbereich einer stationären Einheit 111 beziehungsweise einer stationären Antenne 129 einer stationären Einheit 111 und kann beispielsweise unteren 3 Bit der "langen" Adresse umfassen. Hierbei kann vorgesehen sein, dass wenn das erste Bit der 4-bit-Adresse 361 1 ist, alle im Einflussbereich der stationären Antenne 129 beziehungsweise der stationären Einheit 111 befindlichen beweglichen Einheiten 103 angesprochen werden sollen. Ist das erste Bit der 4-bit-Adresse 361 0, kann auf den verbleibenden drei Bits mit der kurzen Adresse eine der beweglichen Einheiten 103 adressiert werden.

Über den Telegrammtyp 362 kann beispielsweise festgelegt werden, welche Daten übertragen werden und wie viele Bytes diese umfassen. Es kann hierüber festgelegt werden, ob es zyklische Daten sind, die vorher definiert und konfiguriert werden. Dies ermöglicht auch, zu definieren, mit welchen Daten die bewegliche Einheit 103 zu antworten hat. Alternativ kann festgelegt werden, dass es sich um eine asynchrone Übertragung handelt, bei der über eine Parameter-ID mit eventuellem Index und Subindex in einer oder mehrere Übertragungen die komplette Datenübertragung definiert werden kann. Der Telegrammtyp 362 kann aber auch als Längenanzeige des ersten Kommunikationsframes 341 beziehungsweise des zweiten Kommunikationsframes 342 genutzt werden.

Die 4-bit-Adresse 361 und der Telegrammtyp 362 bilden dabei eines der ersten Bytes 331.

Mittels der Kommunikationssteuerungsinformation 363, die ein weiteres der ersten Bytes 331 bildet, kann eine Kommunikation zwischen der stationären Einheit 111 und der beweglichen Einheit 103 gesteuert werden beziehungsweise eine Statusmeldung gegeben werden. Es kann beispielsweise gekennzeichnet werden, ob dies der Anfang einer Kommunikation ist, oder es sich um eine fortlaufende Übertragung handelt (beispielsweise bei einem längeren Dateitransfer) oder auch ob eine Übertragung beendet ist. Es kann gekennzeichnet werden, ob ein lesender oder schreibender Zugriff erfolgen soll. Ebenfalls können Übertragungsfehler hier gekennzeichnet oder ein Kommunikationsstatus hier angegeben beziehungsweise vorgegeben werden. Der Kommunikationsstatus kann beispielsweise den EtherCAT-States Init, Pre-Op, Safe-Op oder OP entsprechen.

Die zyklische Redundanzprüfung 364 dient der Sicherung der Kommunikation. Insbesondere kann das die zyklische Redundanzprüfung 364 beinhaltende erste Byte 331 einen Prüfwert des ersten Kommunikationsframes 341 enthalten, mit dem Übertragungsfehler erkannt werden können.

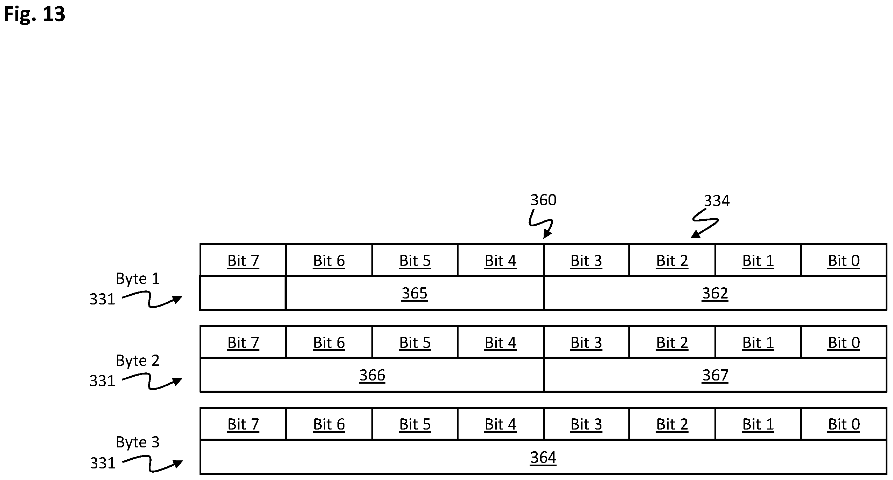

Fig. 13 zeigt drei erste Bytes 331, die zusammen zweite Kopfdaten 334 bilden. Die zweiten Kopfdaten 334 werden von der beweglichen Einheit 103 zur stationären Einheit 111 übertragen. Die zweiten Kopfdaten 334 können als Header 360 der Datenübertragung von der beweglichen Einheit 103 auf die stationäre Einheit 111 aufgefasst werden. Die zweiten Kopfdaten 334 bestehen aus einer 3-bit-Adresse 365, einem Telegrammtyp 362, einem Kommunikationsstatus 366, einer Statusinformation 367 und einer zyklischen Redundanzprüfung 364. Hierbei können jedoch auch einzelne Elemente der zweiten Kopfdaten 334 weggelassen werden, andere Bitlängen aufweisen oder weitere, hier nicht aufgeführte Elemente aufweisen. Beispielsweise kann der Header 360 nur den Telegrammtyp 362 umfassen, wobei der Telegrammtyp 362 die Länge des zweiten Kommunikationsframes 342 umfasst. Die zweiten Kopfdaten 334 können dabei innerhalb des zweiten Kommunikationsframes 342 übertragen werden.

Die 3-bit-Adresse 365 kann der "kurzen" Adresse der beweglichen Einheit 103 entsprechen. Dadurch kann übertragen werden, von welcher beweglichen Einheit 103 innerhalb der Reichweite der stationären Antenne 129 die Kommunikation empfangen wird. Der Telegrammtyp 362 kann analog zu Fig. 12 ausgestaltet sein.

Es kann vorgesehen sein, dass der Kommunikationsstatus 366, wie in Fig. 13 gezeigt, weniger Datenvolumen benötigt, als die Kommunikationssteuerungsinformation 363. In diesem Fall kann innerhalb des ersten Bytes, in dem der Kommunikationsstatus 366 übertragen wird, zusätzlich eine Statusinformation 367 vorgesehen sein, wobei Kommunikationsstatus 366 und Statusinformation 367 ein erstes Byte 331 umfassen. Die Statusinformation 367 kann einen anwendungsspezifischen Istwert wie beispielsweise eine Spannung umfassen. Damit kann beispielsweise eine Energieübertragung zur beweglichen Einheit 103 mittels der Energiesendespulen 125 gesteuert beziehungsweise geregelt werden. Neben einem konkreten Spannungswert kann die Statusinformation 367 auch als Regelung ausgestaltet sein, indem übertragen wird, ob mehr oder weniger oder gleichviel Energie übertragen werden soll.

Die zyklische Redundanzprüfung 364 entspricht derjenigen der Fig. 12.

Die Nutzdaten 302 können, beispielsweise innerhalb eines der ersten Bytes 331 oder innerhalb der zweiten Bytes 332 einen Zeitstempel umfassen. Dieser Zeitstempel kann beispielsweise eine Systemzeit zum Zeitpunkt des Startbits 311 beinhalten. Auf der beweglichen Einheit 103 kann dann eine Uhr anhand des Zeitpunkts des Empfangs des Startbits 311 und des Zeitstempels synchronisiert werden. Dadurch kann beispielsweise ein Ansteuerungsbefehl für das Werkzeug 137 übertragen werden, der beinhaltet, eine Aktion des Werkzeugs 137 zu einem bestimmten Zeitpunkt auszuführen. Die Startsequenz 301 der Kommunikation von der stationären Einheit 111 zur beweglichen Einheit 103 kann dabei in einem festen Raster einer Zykluszeit erfolgen und genutzt werden um die Uhr auf der beweglichen Einheit 103 nachzustellen beziehungsweise zu synchronisieren, beispielsweise mit einer PLL (Phase Locked Loop - Phasenregelschleife). Mit der Übertragung einer systemweit gültigen Uhrzeit und dieser Synchronisation können alle Uhren auf allen beweglichen Einheiten 103 sehr exakt gleich eingestellt werden.

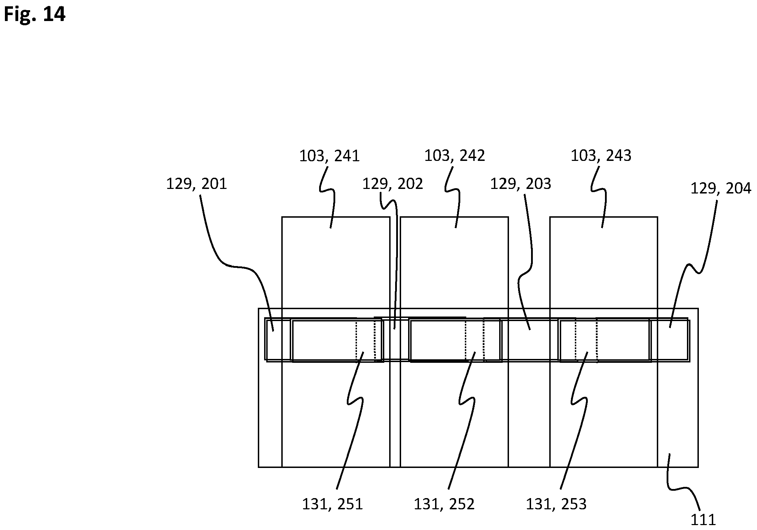

Fig. 14 zeigt eine schematische Ansicht einer stationären Einheit 111 mit mehreren beweglichen Einheiten 103. Die stationäre Einheit 111 weist wieder vier stationäre Antennen 129 auf, eine erste stationäre Antenne 201, eine zweite stationäre Antenne 202, eine dritte stationäre Antenne 203 sowie eine vierte stationäre Antenne 204. Eine erste bewegliche Einheit 241 weist eine erste bewegliche Antenne 251 auf. Die erste bewegliche Einheit 241 ist dabei im Bereich der ersten stationären Antenne 201 angeordnet. Die zweite bewegliche Einheit 242 ist dabei im Bereich der zweiten stationären Antenne 202 angeordnet. Die dritte bewegliche Einheit 243 ist dabei im Bereich der vierten stationären Antenne 204 angeordnet. Je nachdem ob mit der ersten beweglichen Einheit 241, der zweiten beweglichen Einheit 242 oder mit der dritten beweglichen Einheit 243 kommuniziert werden soll, kann eine Identifikationsinformation also dazu dienen, die erste stationäre Antenne 201, die zweite stationäre Antenne 202 oder die vierte stationäre Antenne 204 auszuwählen. Sollte trotzdem ein Übersprechen beispielsweise von der ersten stationären Antenne 201 zur zweiten beweglichen Antenne 252 der zweiten beweglichen Einheit 242 zu befürchten sein, kann die im Zusammenhang mit der Fig. 12 erläuterte 4-bit-Adresse 361 verwendet werden, um eine eindeutige Zuordnung der Kommunikation zu erreichen. Bei Antennenpaaren, bei denen bekannt ist das es kein Übersprechen geben kann, wie beispielsweise der ersten stationären Antenne 201 mit der ersten beweglichen Antenne 251 und der vierten stationären Antenne 204 mit der dritten beweglichen Antenne 253 kann auch eine gleichzeitige Kommunikation stattfinden. Insbesondere kann auch eine parallele Kommunikation von verschiedenen stationären Einheiten 111 auf verschiedene bewegliche Einheiten 103 vorgesehen sein.

Anhand der Fig. 14 wird ferner ein Verfahren zum Initialisieren eines linearen Transportsystems 101 beschrieben. Das lineare Transportsystem 101 kann dabei wie in den vorherigen Figuren beschrieben ausgestaltet sein. Folgende Schritte werden von der Steuereinheit 133 ausgeführt. Zunächst werden Positionsdaten der beweglichen Antenne 131 der zu initialisierenden beweglichen Einheit 103 ermittelt. Anschließend wird mindestens eine stationäre Antenne 129 einer der stationären Einheiten 111 innerhalb des Transportsystems 101 anhand der Positionsdaten der beweglichen Antenne 131 ausgewählt. Dann wird ein Datenpaket an die stationäre Einheit 111 ausgegeben, wobei das Datenpaket eine Initialisierungssequenz umfasst. Nun wird eine eindeutige Zuordnungsadresse der beweglichen Einheit 103 festgelegt.

Dieses Verfahren ermöglicht, die beweglichen Einheiten 103 anhand der eindeutigen Zuordnungsadressen zu adressieren und dadurch eine Kommunikation zu steuern beziehungsweise festzulegen, welche der beweglichen Einheiten 103 Empfänger einer Nachricht sein soll.

In einem Ausführungsbeispiel soll die zweite bewegliche Einheit 242 in Fig. 14 initialisiert werden. Die Initialisierungssequenz umfasst eine Ticketnummer. Es werden zwei stationäre Antennen 129 ausgewählt, wobei die zweite bewegliche Antenne 252 der zweiten beweglichen Einheit 242 im Einflussbereich der beiden ausgewählten stationären Antennen 129 angeordnet ist. Die zweite bewegliche Antenne 252 überlappt mit der zweiten stationären Antenne 202 und der dritten1 stationären Antenne 203. Das Datenpaket umfasst eine Steuerinformation derart, dass die Ticketnummer von der zweiten stationären Antenne 202 und der dritten stationären Antenne 203 mindestens einmal zu unterschiedlichen Zeitpunkten auszugeben ist.

Die zweite stationäre Antenne 202 und die dritte stationäre Antenne 203 sind dabei auf verschiedenen räumlichen Seiten der zweiten beweglichen Einheit 242 angeordnet. Die erste bewegliche Einheit 241 befindet sich nur im Einflussbereich der zweiten stationären Antenne 202 während sich die dritte bewegliche Einheit 243 nur im Einflussbereich der dritten stationären Antenne 203 befindet. Sowohl die erste bewegliche Einheit 241 als auch die dritte bewegliche Einheit 243 stellen weitere, aktuell nicht zu initialisierende bewegliche Einheiten 103 dar und sind im Einflussbereich einer der ausgewählten stationären Antennen 129 angeordnet. Da jedoch nur die zu initialisierende zweite bewegliche Einheit 242 im Einflussbereich beider ausgewählter Antennen 129, also der zweiten stationären Antenne 202 und der dritten stationären Antenne 203 angeordnet ist, kann die zweite bewegliche Einheit 242 anhand der Anzahl der empfangenen Ticketnummern feststellen, dass genau die zweite bewegliche Einheit 242 aktuell initialisiert werden soll. Dies kann beispielsweise dadurch erfolgen, dass nach jedem Empfang einer Initialisierungssequenz mit der Ticketnummer ein Zähler in der entsprechenden beweglichen Einheit 103 jeweils um eins erhöht, der Zähler mit einem vorgegebenen Wert verglichen und eine eindeutige Zuordnungsadresse ausgegeben wird, wenn der Zähler den vorgegebenen Wert übersteigt. Die eindeutige Zuordnungsadresse kann in diesem Fall eine bereits während der Produktion der beweglichen Einheit 103 vergebene Identifikationsnummer sein. Die erste bewegliche Einheit 241 empfängt dabei nur die durch die zweite stationäre Antenne 202 ausgegebenen Ticketnummern, die dritte bewegliche Einheit 243 empfängt dabei nur die durch die dritte stationäre Antenne 203 ausgegebenen Ticketnummern. Nur die zweite bewegliche Einheit 242 empfängt sowohl die durch die zweite stationäre Antenne 202 als auch die durch die dritte stationäre Antenne 203 ausgegebenen Ticketnummern. Somit erhöht sich der Zähler der zweiten beweglichen Einheit 242 schneller als die Zähler der ersten beweglichen Einheit 241 beziehungsweise dritten beweglichen Einheit 243. Der Zähler der zweiten beweglichen Einheit 242 erreicht den vorgegebenen Wert also schneller. Insbesondere kann der vorgegebene Wert größer sein, als die Anzahl der Aussendungen der Ticketnummer durch die zweite Antenne 202 und kleiner sein als das Doppelte der Anzahl der Aussendungen der Ticketnummer durch die zweite Antenne 202. Dadurch kann eine eindeutige Zuordnung der zweiten beweglichen Einheit 242 erfolgen.

Es kann vorgesehen sein, dass die Ticketnummer von der zweiten stationären Antenne 202 und der dritten stationären Antenne 203 mehrfach ausgegeben wird. Dadurch können Auswirkungen von Übertragungsfehlern reduziert werden, wenn beispielsweise jede der ausgewählten stationären Antennen die Ticketnummer viermal überträgt und der vorgegebene Wert, mit dem der Zähler verglichen wird, sechs beträgt. Die zweite bewegliche Einheit 242, die initialisiert werden soll, muss dann nur sechs von acht Übertragungen der Ticketnummer korrekt empfangen. Die erste bewegliche Einheit 241 beziehungsweise die dritte bewegliche Einheit 243, die sich im Einflussbereich nur einer der ausgewählten stationären Antennen 129 befinden, wird jedoch selbst ohne Übertragungsfehler nur vier Übertragungen der Ticketnummer empfangen, so dass der Zähler für erste bewegliche Einheit 241 beziehungsweise die dritte bewegliche Einheit 243 unter dem vorgegebenen Wert bleibt.

Wird der vorgegebene Wert vom Zähler nicht erreicht, also wie für die erste bewegliche Einheit 241 und die dritte bewegliche Einheit 243 und soll nun eine von diesen initialisiert werden, wird eine weitere Ticketnummer, die sich von der vorherigen Ticketnummer unterscheidet, verwendet. Nach dem Empfang der weiteren Ticketnummer wird der Zähler wieder neu gestartet und wie beschrieben erhöht. Dadurch kann eine eindeutige Zuordnung erreicht werden. Dieses Verfahren kann insbesondere im laufenden Betrieb verwendet werden, wenn ein zusätzliches Positionieren der beweglichen Einheiten 103 zur Initialisierung nicht erfolgen soll.

Es kann ferner vorgesehen sein, dass weitere stationäre Antennen 129, also beispielsweise die erste stationäre Antenne 201 und die vierte stationäre Antenne 204 zusätzlich verwendet werden.

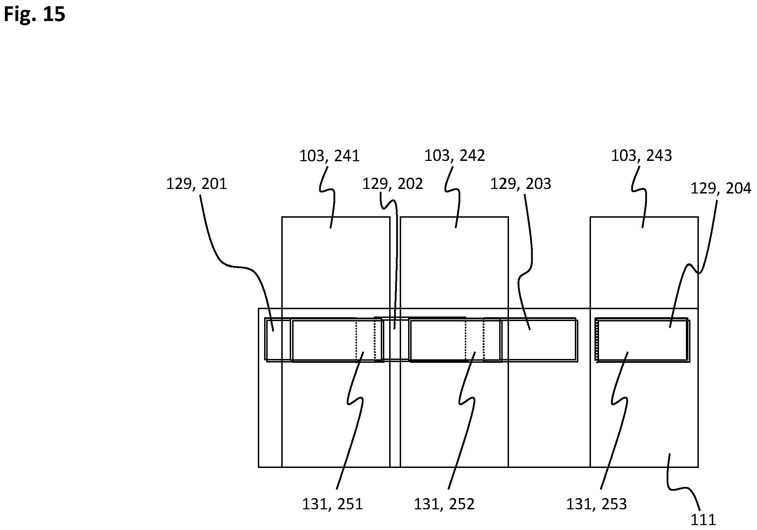

Fig. 15 zeigt die stationären Einheiten 111 und beweglichen Einheiten 103 der Fig. 14, wobei die dritte bewegliche Einheit 243 bewegt wurde. Dies erfolgt im Rahmen eines weiteren Verfahrens zum Initialisieren eines linearen Transportsystems 101, bei dem zusätzlich Steuerbefehle für einen Antrieb des linearen Transportsystems 101 ausgegeben werden. Anhand der Steuerbefehle wird ein Antrieb des Transportsystems derart gesteuert, dass die dritte bewegliche Antenne 253 der zu initialisierenden dritten beweglichen Einheit 243 in den Einflussbereich der vierten stationärer Antenne 204 bewegt wird. Die zweite bewegliche Einheit 242 und auch die erste bewegliche Einheit 241 befinden sich dann nicht im Einflussbereich der vierten stationären Antenne 204, so dass eine Übertragung von der vierten stationären Antenne 204 zur dritten beweglichen Antenne 253 und damit der dritten beweglichen Einheit 243 zur Initialisierung der dritten beweglichen Einheit 243 genutzt werden kann. Zusätzlich kann vorgesehen sein, die zweite bewegliche Einheit 242 und auch die erste bewegliche Einheit 241 von der vierten stationären Antenne 204 wegzubewegen.

Dies ermöglicht, die Auswahl der stationären Antennen 129 zu verbessern und ferner auch eine Initialisierung der beweglichen Einheit 103, bei der nur eine stationäre Antenne 129 verwendet wird. In diesem Fall kann die zu initialisierende bewegliche Einheit 103, hier die dritte bewegliche Einheit 243, in den Einflussbereich der vierten stationären Antenne 204 gebracht werden und alle anderen beweglichen Einheiten 103, hier die erste bewegliche Einheit 241 und die zweite bewegliche Einheit 242 zu Positionen außerhalb des Einflussbereichs der vierten stationären Antenne 204 gebracht werden.

In einem Ausführungsbeispiel des Verfahrens zum Initialisieren eines linearen Transportsystems wie anhand der Fig. 14 und 15 beschrieben erfolgt das Festlegen der eindeutigen Zuordnungsadresse der beweglichen Einheit 103 derart, dass eine von der zu initialisierenden beweglichen Einheit 103 über die bewegliche Antenne 131 ausgesendete Zeichenfolge als eindeutige Zuordnungsadresse gespeichert wird. Diese Zeichenfolge kann eine bereits während der Produktion der beweglichen Einheit 103 vergebene Zeichenfolge sein.

In einem Ausführungsbeispiel des Verfahrens zum Initialisieren eines linearen Transportsystems wie anhand der Fig. 14 und 15 beschrieben wird anschließend eine 3-bit-Adresse an die stationäre Einheit 111 ausgegeben, wobei die 3-bit-Adresse zur beweglichen Einheit 103 übertragen werden soll. Diese 3-bit-Adresse kann der bereits beschriebenen 3-bit-Adresse 365 in den ersten Kopfdaten 333 der Fig. 12 und 13 entsprechen. Die bewegliche Einheit 103 kann eingerichtet sein, die 3-bit-Adresse zu empfangen.

In einem Ausführungsbeispiel des Verfahrens zum Initialisieren eines linearen Transportsystems wie anhand der Fig. 14 und 15 beschrieben erfolgt das Festlegen der eindeutigen Zuordnungsadresse derart, dass eine Zeichenfolge und eine 3-bit-Adresse von der Steuereinheit 133 bestimmt und an die stationäre Einheit 111 ausgegeben werden. Die Zeichenfolge und die 3-bit-Adresse sollen zur beweglichen Einheit 103 übertragen werden. Dadurch kann eine Zeichenfolge für die bewegliche Einheit 103 bestimmt werden, wenn während der Produktion der beweglichen Einheit 103 keine Zeichenfolge vergeben worden ist. Ferner kann dieses Verfahren genutzt werden, um eine während der Produktion der beweglichen Einheit 103 vergebene Zeichenfolge zu ersetzen.

In einem Ausführungsbeispiel des Verfahrens zum Initialisieren eines linearen Transportsystems wie anhand der Fig. 14 und 15 beschrieben wird das Verfahren für eine weitere bewegliche Einheit 103 wiederholt. Insbesondere wird das Verfahren für alle beweglichen Einheiten 103 wiederholt.

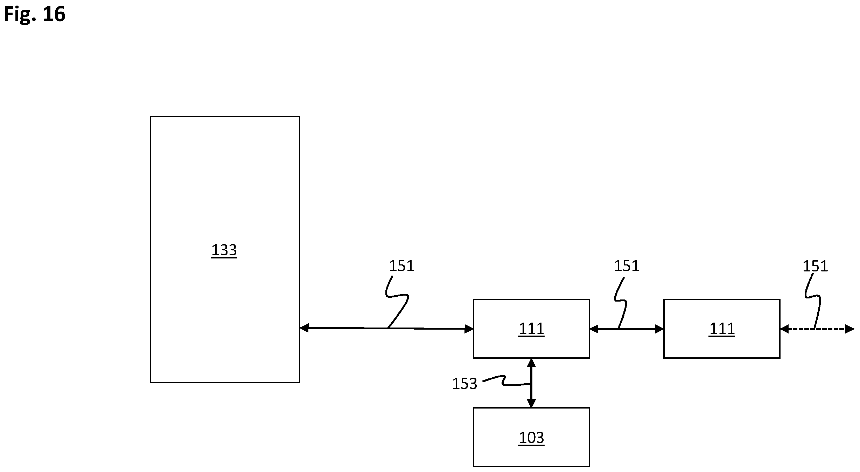

Fig. 16 zeigt eine schematische Übersicht einer Kommunikation zwischen einer Steuereinheit 133, stationären Einheiten 111 und einer beweglichen Einheit 103. Die stationären Einheiten 111 und die bewegliche Einheit 103 können dabei wie oben beschrieben ausgestaltet sein. Mittels einer Kommunikationsverbindung 151 ist die Steuereinheit 133 mit einer der stationären Einheiten 111 verbunden und diese wiederum mit einer weiteren der stationären Einheiten 111. Die Kommunikationsverbindung 151 kann dabei eine EtherCAT-Verbindung sein. Es können auch weitere, in Fig. 16 nicht gezeigte Kommunikationsteilnehmer wie beispielsweise Motorplatinen, Sensorplatinen und Buskoppler, an die Kommunikationsverbindung 151 angeschlossen sein. Mittels drahtlosen Datenkommunikation 153 ist eine der stationären Einheiten 111 mit der beweglichen Einheit 103 verbunden, wobei mittels der drahtlosen Datenkommunikation 153 die oben beschriebene Datenübertragung zwischen einer der stationären Antennen 129 und der beweglichen Antenne 131 durchgeführt werden kann.

Durch die Kommunikationsverbindungen 151 können die stationären Einheiten 111 mit einer zentralen Uhr synchronisiert werden. Über die drahtlose Datenkommunikation 153 kann auch die bewegliche Einheit 103 mit der zentralen Uhr synchronisiert werden. Eine Uhr der beweglichen Einheit kann mittels synchroner Kommunikation und/oder mittels Verwendung des oben beschriebenen Zeitstempels (Uhrzeit) auf die zentrale Uhr das linearen Transportsystems 101 ein- und nachgeregelt werden. Dabei kann mittels einer PLL (Phase Locked Loop - Phasenregelschleife) auf der beweglichen Einheit 103 eine Echtzeit auf der beweglichen Einheit 103 nachgeregelt werden und somit Abweichungen von der zentralen Uhr vermieden werden. Auch über längere Zeiträume kann so eine Synchronisierung erfolgen, selbst wenn im linearen Transportsystem 101 Abschnitte ohne Kommunikationsmöglichkeit zwischen stationärer Einheit 111 und beweglicher Einheit 103 vorgesehen sind. Eine verbleibende Drift der Uhr der beweglichen Einheit 103 liegt im Bereich der Gangungenauigkeit von verschiedenen Zeitgebern. Beispielsweise können Quarzoszillatoren mit einer typischen Gangungenauigkeit von +/- 10 ppm bis 100 ppm eingesetzt werden. Dies bedeutet, dass über einen Zeitraum von 10 Sekunden eine Abweichung von zweimal 1 ms bis zweimal 0.1 ms entstehen kann. Nach dem Empfang der Startsequenz, welches den Beginn einer neuen Übertragung zur beweglichen Einheit 103 kennzeichnet, kann die bewegliche Einheit 103 ihre PLL ausführen, wenn die Startsequenzen zu festgelegten Zeitpunkten ausgesendet werden.

Über die zeitliche Synchronisation können Aktionen eines Werkzeugs 137 auf der beweglichen Einheit 103 zeitlich passend zu einem Maschinenablauf oder an einer bestimmten Position der beweglichen Einheit 103 ausgeführt werden, Beispielsweise ein Greifen eines Produktes, das über eine andere Komponenten wie beispielsweise eine Lichtschranke erfasst wurde. Bestimmte Aktionen auf der beweglichen Einheit 103 können mit einem Zeitstempel für den Sollwert übertragen werden um diesen passend auszuführen.

Dadurch ist es beispielsweise möglich, auch wenn die Übertragung eines komplexen Aktionssollwertes eine längere Zeit oder mehrere Kommunikationszyklen benötigt, trotzdem den zukünftigen Zeitpunkt der Aktion Systemweit genau festzulegen. Es können so Aktionen zu einem späteren Zeitpunkt ausgeführt werden. Auch für Streckenabschnitte innerhalb des linearen Transportsystems, an denen keine Funkverbindung 153 zur beweglichen Einheit 103 vorhanden ist, können so Aktionen geplant und anschließend durchgeführt werden. So können auch nur mit einem bzw. wenigen stationären Einheiten 111, die eine stationäre Antenne 129 beinhalten, zeitsynchrone Aktionen auf einer viel längeren Strecke gesteuert und ausgeführt werden. Voraussetzung kann ein geeigneter Energiespeicher auf der beweglichen Einheit 103 sein, um die spätere Aktion zu gewährleisten. Alternativ kann auch eine Energieübertragung mittels Energiesendespule 125 am für die Aktion relevanten Ort erfolgen. Es besteht also die Möglichkeit, kostenoptimierte stationäre Einheiten 111 einzusetzen, wobei einige stationäre Einheiten 111 mit Energiesendespulen 125 und stationären Antennen 129 und andere stationäre Einheiten 111 nur mit Energiesendespulen 125 ausgestattet sind. Eine spätere Zeit- und Positionssynchrone Aktion kann so von einem stationären Modul 111 mit Energiesendespulen 125 und stationären Antennen 129 vorbereitet werden.

Ferner kann das lineare Transportsystem 101 durch die Verwendung von Zeitstempeln robuster gegen Störungen in der Kommunikation werden. Durch eine frühzeitigt Datenübertragung mit Zeitstempel kann das Datensignal 300 noch einige Male wiederholt werden bevor der eigentliche Aktionszeitpunkt erreicht wird. Ferner kann eine längere Kommunikation zu mehreren beweglichen Einheiten 103 hintereinander erfolgen, wobei die Aktion trotzdem auf diesen mehreren beweglichen Einheiten 103 gleichzeitig stattfindet. Ebenso kann auf der beweglichen Einheit 103 bei einem bestimmten Ereignis dieses Ereignis, beispielsweise einem Messwert, ein systemweit geltender Zeitstempel mitgegeben werden. Dadurch ergeben sich weitere Vorteile in der Weiterverarbeitung.

Über die zeitliche Synchronisation lässt sich auch eine größere Datenmenge, die zwischen einer beweglichen Einheit 103 und der Steuereinheit 133 des linearen Transportsystems 101 ausgetauscht werden soll, über mehrere Kommunikationszyklen 340 und stationäre Einheiten 111 hinweg übertragen, während die bewegliche Einheit 103 sich über die verschiedenen stationären Einheiten 111 bewegt. In der beweglichen Einheit 103 oder in der Steuereinheit 133 (je nach Richtung der Übertragung) können die Daten trotzdem richtig zusammengesetzt werden.

Ist die oben beschriebene Adressierung mittels der 4-bit-Adresse 361 vorgesehen, kann eine zeitliche Synchronisation mehrerer beweglicher Einheiten durch den Empfang der Startsequenz 301 durch mehrere bewegliche Einheiten 103 erfolgen, auch wenn die eigentlichen Nutzdaten 302 der Kommunikation nur für eine bestimmte bewegliche Einheit 103 bestimmt sind.

Das lineare Transportsystem 101 kann beispielsweise in der Automatisierungstechnik angewendet werden. Das an der beweglichen Einheit 103 angeordnete Werkzeug 137 kann beispielsweise eine Greifer, einen Schieber, einen Bohrer, eine Ausrichtevorrichtung, eine mechanische oder magnetische Kopplung mehrerer beweglicher Einheiten 103, ein Messwerkzeug zur Messung einer physikalischen Größe wie beispielsweise Temperatur, Druck, Strom, Spannung, Beschleunigung, Masse, Lichteinfall umfassen. Ferner kann das Werkzeug 137 einen Lesekopf, mit dem ein Encoderband ausgelesen werden kann und so eine weitere Positionsbestimmung ermöglicht wird, umfassen. Diese weitere genauere Position kann dann auch zu einer verbesserten Regelung der beweglichen Einheit 103 und/oder Ansteuerung des Linearmotors 107 genutzt werden. Dieses Prinzip kann natürlich auch mit anderen auf der beweglichen Einheit 103 gemessenen physikalischen Größen, beispielsweise Beschleunigungen oder Schwingungen, genutzt werden. Außerdem können mittels des Werkzeugs 137 physikalische Größen auf der beweglichen Einheit 103 erzeugt werden. Über eine Bewegung des Werkzeugs 137 der beweglichen Einheit 103 könnte eine Kraft erzeugt werden und mit einer einstellbaren Stromgrenze der verwendeten Antriebsspule ließe sich die Kraft auch regeln bzw. einstellen. Ferner könnte ein Vakuum erzeugt werden. Damit können Produkte über einen besonderen Sauger besonders schonend für das Produkt selbst aufgenommen und wieder abgegeben werden. Es könnten Prüfspannungen erzeugt werden. Über solche Prüfspannungen wäre es auch möglich, Produkte die aus komplexeren elektronischen Schaltkreisen bestehen, funktionell zu prüfen.

Auch eine Kommunikation zu einem komplexeren Produkt mit einer Kommunikationsschnittstelle wäre möglich. Es können auch andere physikalische Größen zur Materialprüfung erzeugt werden, beispielsweise Ultraschall, oder Ströme oder Licht. Es kann auch eine Kommunikation zu einem durch die bewegliche Einheit 103 transportierten Werkstück aufgebaut werden und so Prüfungen oder andere Produktionsüberwachungen stattfinden, beispielsweise ein lückenloses Produkttracking, wenn diese Daten mit weiteren Daten in der Steuereinheit 133 verbunden und beispielsweise in eine Datenbank geschrieben werden. Es können somit in vorteilhafterweise Daten auf einem Werkstück geschrieben bzw. von diesem gelesen werden.

Ferner könnte eine Heizung vorgesehen sein, um zielgerichtet und begrenzt auf eine kleine Stelle eine höhere Temperatur zu erzeugen um bei einem Prozess beispielsweise einen Kleber oder Lack schneller und energieeffizienter zu trocknen. Dabei kann vorgesehen werden, ein Werkstück oder ein Produkt auf der beweglichen Einheit 103 auf einer bestimmten Temperatur zu halten, beispielsweise um das Werkstück oder Produkt länger bearbeiten zu können. Mit einer schaltbaren Magnetfeldquelle (Spule) können magnetische Teile einfach fixiert, transportiert und wieder abgesetzt werden. Ferner kann die bewegliche Einheit 103 eine Kamera oder andere Sensoren umfassen, um das lineare Transportsystem 101 auf Verschleiß, Dreck oder anderes hin zu untersuchen. Dies ist insbesondere nützlich wenn das lineare Transportsystem 101 nur schwer oder überhaupt nicht zugängliche Stellen aufweist.

Auf der beweglichen Einheit 103 können dabei Bewegungen jeglicher Art durchgeführt werden, beispielsweise auch quer zur durch die Führungsschiene 105 definierten Fahrtrichtung. Ein Greifer kann Produkte greifen und wieder loslassen, ohne dass eine mechanische Kulisse mit Federn benötigt wird. Es kann vorgesehen sein, je nach Status des Produktes, dieses auch auf einem anderen Band abzulegen und so beispielsweise auszusortieren. Das Werkzeug 137 kann einen Schieber aufweisen, um Produkte gezielt von einer beweglichen Einheit 103 beispielsweise auf ein Band zu schieben. Über den Schieber oder ein ähnlich bewegbares Element auf der beweglichen Einheit 103 kann ein Produktfluss, der über ein lineares Transportsystem 101 abgewickelt wird, auf verschiede weiterführende Transportmittel wie beispielsweise Bänder verteilt werden. So ist es mit nur einem linearen Transportsystem 101 ohne Weiche (mit welcher die beweglichen Einheiten 103 in unterschiedliche Richtungen geführt werden könnten) möglich, eine schnellen Produktfluss bedarfsgerecht aufzuteilen und in der umgekehrten Richtung auch wieder zusammen zu führen.

Es können durch das Werkzeug 137 Bewegungen ausgeführt werden, mit denen das Produkt manipuliert werden kann, beispielsweise um einen Karton aufzurichten oder Produkte zu bearbeiten. Dabei können Bohrer zum Einsatz kommen oder Druck mittels einer Presse auf das Produkt ausgeübt werden. Ferner kann eine Drehbewegung erfolgen, die eine Ausrichtung von Produkten von längs zu quer ändert, beispielsweise mittels Drehung einer Werkstückhalterung. Produkte können angehoben werden. Produkte können gedreht werden und damit kann beispielsweise ein Deckel einer Flasche verschraubt werden. Produkte können auch in Ihrem Abstand zueinander verändert werden. Durch eine Aktorik auf der beweglichen Einheit 103 kann ein Produkt verschoben werden, so dass Produktfehlstellen auf einer leeren beweglichen Einheit 103 ausgeglichen werden können. So können in einer Reihe von beweglichen Einheiten 103 mit einer Produktfehlstelle in der Reihe, die Produkte auf den Einheiten links davon um den halben Abstand nach rechts bewegt werden und auf der anderen Seite umgekehrt, so dass die Produkte zu weiteren Verarbeitung ohne Fehlstelle dazwischen mit einem gleichen Abstand zueinander von einer folgenden Maschineneinheit entnommen werden können.

Produkte wie Flaschen können exakt ausgerichtet werden, wenn man beispielsweise auf einer Flasche ein Etikett, eine Bedruckung oder ein anderes Bauteil wie z.B. einen Trinkhalm aufbringen will. Bewegungen können überlagert werden. Verschiedene Hardware kann in das Werkzeug 137 der beweglichen Einheit 103 integriert sein, und kann über Sollwerte angesteuert werden, beispielsweise auch über PWM Signale (Magnetventile, DC Motor, Stepper, kleiner Servo, VoiceCoil Motor, Vibrationselemente, Elektromagneten, Vakuum, Laser, Ultraschallquelle). Über HW Endlagenschalter oder Fahrten gegen einen Anschlag lässt sich eine absolute Positionierung auch ohne Rückführung erreichen beispielsweise bei einem DC Motor. Über Greifer oder andere Mechanik und eine Messung der Stromaufnahme in der Bewegung könnten Produkte vermessen werden (auch ein Condition Monitoring von Komponenten der beweglichen Einheit 103 als auch Produktkomponenten wird möglich). Es können Produkte sortiert werden und beispielsweise zwischen beweglichen Einheiten 103 und Ablagestationen übergeben werden.

Bewegliche Einheiten 103 können zur Erhöhung der Antriebskraft bei Bedarf an- und abgekoppelt werden, beispielsweise indem ein mechanische bewegtes Teil der einen beweglichen Einheit 103 in der anderen beweglichen Einheit 103 verhakt wird oder mittels einer elektromagnetischen Kopplung. Bei einer Synchronisation mit auf einem Band bewegten Produkten kann zwischen dem beweglichen Einheiten 103 Platz eingespart werden, wenn das Werkzeug 137 senkrecht zur durch die Führungsschiene 105 vorgegebenen Fahrtrichtung beweglich ist. Dadurch kann das Werkzeug 137 in engere Produktlücke eintauchen und mit kleineren Lücken zurechtkommen und so eine Maschienenleistung erhöhen. Bewegliche Einheiten 103, die ein Produkt zusammen transportieren können während des Transports eine mechanische Sicherheitskopplung eingehen, die auch bei Fehler (Stromausfall, etc.) dafür sorgt, dass das empfindliche Produkt gehalten wird und nicht herunterfallen kann oder das Produkt selber zerstört wird, beispielsweise durch unterschiedliches Austrudeln der beweglichen Einheiten. Dies ist sowohl dann möglich, wenn beide bewegliche Einheiten 103 Teil desselben linearen Transportsystems 101 als auch wenn beide bewegliche Einheiten 103 Teil von unterschiedlichen linearen Transportsystemen 101 sind.

Ein elektrisch betriebener Werkzeugwechsel auf der beweglichen Einheit 103 ist ebenfalls möglich. Werkzeuge/Aufnahmen/Halterungen können an ein Maß des Produktes intelligent angepasst werden.

Wird das oben beschriebene Verfahren zur Synchronisation der beweglichen Einheit 103 mittels Zeitstempel verwendet, können Bewegungen des Werkzeugs 137 zeitgesteuert starten, auch an Stellen an denen keine Daten übertragen werden können. Ferner können Bewegungen synchron zu einer Position der beweglichen Einheit 103 und externen Prozessen gestartet werden beziehungsweise darauf exakt aufsynchronisiert werden. Insbesondere kann eine Verzögerungszeit der gesamten Daten-übertragung von der Steuereinheit 133 bis zum Werkzeug 137 exakt bekannt sein und diese auf Grund einer kompletten Synchronisation aller Elemente auch nur sehr wenig Jitter besitzen, beispielsweise im Bereich der Gangungenauigkeit oder der PLL Genauigkeiten. Ein weiterer Vorteil ist das sowohl die Applikation der Automatisierungstechnik als auch die Datenkommunikation zum Werkzeug 137 in der Steuereinheit 133 berechnet und bearbeitet werden kann, so dass sich kurze Reaktionszeiten ergeben. Ferner können Produkte in einen Prozess außerhalb des linearen Transportsystems 101 zeitgesteuert eingeführt und wieder heraus geholt werden, beispielswiese in Brennerstationen oder Bädern.

Mittels Datenübertragung können auch beliebige physikalische Größen auf der beweglichen Einheit 103 gemessen werden, wenn das Werkzeug eine geeignete Sensorik umfasst. Nach einer Analog-Digital-Wandlung können Messwerte zur stationären Einheit 111 und auch zur Steuereinheit 133 übertragen werden. Dadurch kann eine höhere Prozesssicherheit insbesondere bei hohem Ausstoß einer Maschine erreicht werden. Ferner ermöglicht dies Fertigung von Einzelstücken oder kleinen Serien. Es kann eine Temperatur überwacht werden und auch eine Prozessaussage darüber wäre möglich (beispielsweise in einer Kühlkettenüberwachung). Ein Druck kann gemessen und überwacht werden. Es kann ein elektrischer Test einer Platine auf der beweglichen Einheit 103 durchgeführt werden, beispielsweise vergleichbar mit einen ICT Test. In solch einem Test wäre es auch möglich, mit einem bestimmten Kommuni-kationsprotokoll mit dem Werkzeug 137 zu kommunizieren und Testdaten auszutauschen beziehungsweise komplizierte zeitliche Abläufe zu testen. Ein Ladevorgang (sowohl Strom als auch Spannung) eines Bauteils wie beispielsweise eines Akkumulators auf der beweglichen Einheit 103 kann gemessen werden. Von der beweglichen Einheit 103 empfangene Signale können auch in einer Art Regelung auf die Bewegungsvorgabe der beweglichen Einheit 103 wirken. Hier wäre beispielsweise eine direkte Bewegungsregelung-Regelung denkbar, bei der über einen Beschleunigungssensor eine Ist-Beschleunigung auf der beweglichen Einheit 103 oder eventuell nur an einem bestimmten Punkt auf der beweglichen Einheit 103 erfasst und diese in einer geeigneten Beobachterstruktur in der Regelung genutzt wird (beispielsweise bei größeren/längeren Werkzeugen oder Produkten die zu Schwingungen oder ähnlichen neigen). Auch andere Sensoren wie Schwingungssensoren könnten als Rückführung genutzt werden. Eine auf der beweglichen Einheit 103 gemessene Temperatur könnte in der Regelung genutzt werden, beispielswiese um eine thermische Ausdehnung zu kompensieren.

Produkte können gewogen werden und beispielsweise ein Füllprozess darüber gesteuert werden. Im Werkzeug 137 können Licht- und/oder Induktionssensoren für eine Produkterkennung vorgesehen sein. Es kann auch ein direkter elektrischer Kontakt, und über diesen Kontakt dann eine Datenkommunikation, zwischen dem Werkzeug 137 und/oder Produkt und dem zweiten Mikrokontroller 223 der beweglichen Einheit 103 bestehen. Zwischen dem zweiten Mikrokontroller 223 und dem Werkzeug 137 kann es aber auch noch einen (mehrere) weitere(n) Mikrocontroller, z.B. um die Applikation auf der beweglichen Einheit 103 zu steuern, geben. Eine weitere genaue Positionsmessung zusätzlich oder alternativ zur Positionsmessung mittels Positionsdetektionselement 143 und Positionssensor 145 wäre möglich. Mit einem Lesekopf auf der beweglichen Einheit 103 und einem Encoderband entlang den stationären Einheiten 111 könnte beispielsweise eine insgesamt kostengünstigere Positionsbestimmung möglich sein, insbesondere für ein lineares Transportsystem 101 mit einer großen Anzahl von stationären Einheiten 111 und wenigen beweglichen Einheiten 103. Die so ermittelten Positionsdaten können dann parallel oder alternativ in der Regelung der Antriebsspulen verwendet werden. Damit ließe sich günstig über einen längeren Weg eine Position der beweglichen Einheit 103 und sogar von mehreren beweglichen Einheiten 103 gleichzeitig messen. Mittels einer Signalstärke der Übertragung kann auch eine Dimension eines Luftspalts ermittelt und beobachtet werden. Ebenfalls ist ein Condition-Monitoring von sowohl der beweglichen Einheit 103 als auch von Produktkomponenten möglich, beispielsweise mit auf der beweglichen Einheit 103 verbauten Beschleunigungs- und/oder Schwingungssensoren.

Eine Adresse der beweglichen Einheit 103 kann gelesen werden, wodurch insbesondere in großen verzweigten Systemen, in denen bewegliche Einheiten 103 zwischen frei beweglichen Streckenabschnitten frei verfahren werden können, eine Identifizierung der beweglichen Einheiten 103 ermöglicht. Die Adresse kann dabei der beweglichen Einheit 103 in einer Initialisierungsroutine übermittelt werden, beispielsweise wenn nur eine bewegliche Einheit 103 in Reichweite einer stationären Antenne 129 ist und dies mittels der oben beschriebenen Übertragung einer 1 im ersten Bit der 4-bit-Adresse 361 erfolgt. Ferner kann eine Identifikationsnummer des Werkzeugs 137 und/oder eine Identifikationsnummer eines auf der beweglichen Einheit 103 befindlichen Produkts ID (unter anderem mittels QR/BAR Code) gelesen und/oder geschrieben werden. Dies kann beispielsweise über eine direkte drahtgebundene Kommunikation zwischen Produkt und beweglicher Einheit 103 erfolgen. Auch ein RFID-Lesegerät als Werkzeug 137 mit Kommunikation zu einen RFID-Transponder im Produkt ist möglich. Dies kann die Fertigung von Einzelstücken oder kleinen Serien vereinfachen. Neben der Identifikationsnummer kann auch der Zustand der beweglichen Einheit 103 und/oder des Werkzeuges 137 in einem Speicher auf der beweglichen Einheit 103 abgelegt werden, beispielsweise eine bisherige Laufleistung oder eine Wartungsinformation. Auch eine bewegliche Einheit 103 inklusive Werkzeug 137 aus einem Reservelager kann eine solche Information in einem Speicher hinterlegt haben, da diese von der gesamten Leistung des linearen Transportsystems 101 abweichen kann. Es können mechanische Toleranzen der beweglichen Einheit 103 inklusive derer des Werkzeugs 137 wie beispielsweise ein Positionsoffset einer mechanischen Kante zur Feedbackfahne während eines separaten Arbeitsschrittes mit der beweglichen Einheit 103 ermittelt und abgelegt werden. Auch weitere Parameter, die ein besseres Regelungsverhalten der beweglichen Einheit 103 ermöglichen, können übertragen werden, wie beispielsweise ein Gewicht einer beweglichen Einheit 103 inklusive Werkzeug 137 oder eine exakte Stärke der Magnete 117. Dies könnte zusammen mit der Identifikationsnummer des Werkzeugs 137, einer Identifikationsnummer eines Produkts etc. auch dynamisch erfolgen (beispielsweise während einer bei Produktbe- oder entladung) und sich im Prozess ändern.

Ferner kann eine Cogging Tabelle spezifisch für eine bewegliche Einheit 103 auf dieser abgelegt und von der Steuereinheit 133 abgefragt werden, um einen Cogging-Kraft-Rippel in einer Regelung zu kompensieren. Bei einer Positionsauswertung über Magnete 117 der beweglichen Einheit 103 (Hall-Auswertung) können sowohl Magnettoleranzen als auch Korrekturwerte auf der beweglichen Einheit 103 abgelegt werden, um später eine Kompensationsberechnung mittels der Steuereinheit 133 durchzuführen. Bei einer optischen Inspektion kann das Ergebnis übertragen werden, wobei bei der typischerweise hohen Datenrate die für eine schnelle zyklische Übertragung benötigt würde, kann diese auch über eine andere Kommunikation, beispielsweise über WLAN erfolgen, wobei aber über schnell übertragene Zeitstempel o.ä. eine Synchronisation der Daten der optischen Inspektion zum Bewegungsprozess schnell und eindeutig möglich wäre.

Auch andere Kommunikation auf beispielsweise mobile Endgeräte (Handy und/oder PDA) über NFC oder Wireless können hierüber auf die bewegliche Einheit 103 gelangen oder zum Prozess synchronisiert werden (Kommunikation mit fremden Steuerungen, Prozesse). Die Möglichkeit der externen Kommunikation kann dabei beispielsweise über die Steuereinheit 133 ein- oder ausgeschaltet oder mittels der Steuereinheit 133 weitergegeben werden. Außerdem kann auf der beweglichen Einheit 103 eine Anweisung gespeichert sein, die zuvor übertragen wurde und die Arbeitsanweisungen und/oder sozusagen ein Rezept für das Produkt beinhaltet. Dadurch kann dann anderen Steuerungen mitgeteilt werden, wie das Produkt verarbeitet werden soll (beispielsweise in Bearbeitungs- und Messstationen). Ergebnisse daraus könnten direkt gespeichert werden. Auch können von einem externen Prozess, beispielsweise in einer Bearbeitungsstation, Werte auf die bewegliche Einheit 103 übertragen werden, die über die Datenübertragung zur stationären Einheit 111 dann der Steuereinheit 133 wiederum zur Verfügung stehen. Werte und Zustände eines Produkts und/oder der beweglichen Einheit 103 können auch direkt auf der beweglichen Einheit durch LEDs oder kleine Displays angezeigt werden. Ferner ist es möglich Prozessdaten eines Produktes in einer Datenbank abzulegen.

Ferner ist die Ansteuerung eines Druckkopfes im Digitaldruck, der auf der beweglichen Einheit 103 angeordnet ist, möglich. Durch eine auf der beweglichen Einheit 103 vorgesehene Speichermöglichkeit kann außerdem nach einem Neustart des linearen Transportsystems 101 der komplette Zustand inklusive der beweglichen Einheiten 103 und den auf den beweglichen Einheiten 103 angeordneten Produkten ausgelesen werden. Dadurch kann ein zielgerichtetes Starten des linearen Transportsystems 101 ermöglicht und so Ausschuss minimiert werden.

Für alle der genannten Anwendungen kann sowohl die erfindungsgemäße Datenübertragung als auch eine Energieübertragung zwischen stationärer Einheit 111 und beweglicher Einheit 103 erforderlich sein.

### Bezugszeichenliste

- 101: Transportsystem
- 103: bewegliche Einheit
- 105: Führungsschiene
- 107: Linearmotor
- 109: Stator
- 111: stationäre Einheit
- 113: Läufer
- 117: Magnet
- 125: Energiesendespule
- 127: Energieempfangsspule
- 129: stationäre Antenne
- 131: bewegliche Antenne
- 133: Steuereinheit
- 137: Werkzeug
- 139: Laufrolle
- 141: Lauffläche
- 143: Positionsdetektionselement
- 145: Positionssensor
- 153: drahtlose Datenkommunikation
- 201: erste stationäre Antenne
- 202: zweite stationäre Antenne
- 203: dritte stationäre Antenne
- 204: vierte stationäre Antenne
- 211: erster Chip
- 213: zweiter Chip
- 221: erster Mikrocontroller
- 223: zweiter Mikrocontroller
- 235: Kommunikationsschnittstelle
- 241: erste bewegliche Einheit
- 242: zweite bewegliche Einheit
- 243: dritte bewegliche Einheit
- 251: erste bewegliche Antenne
- 252: zweite bewegliche Antenne
- 253: dritte bewegliche Antenne
- 300: Datensignal
- 301: Startsequenz
- 302: Nutzdaten
- 303: Idle
- 304: Nullbit
- 311: Startbit
- 312: invertiertes Stop-Bit
- 313: Schaltflanke
- 321: Nutzdatenbit
- 331: erstes Byte
- 332: zweites Byte
- 333: erste Kopfdaten
- 334: zweite Kopfdaten
- 340: Kommunikationszyklus
- 341: erster Kommunikationsframe
- 342: zweiter Kommunikationsframe
- 343: Umschaltpause
- 360: Header
- 361: 4-bit-Adresse
- 362: Telegrammtyp
- 363: Kommunikationssteuerungsinformation
- 364: zyklische Redundanzprüfung
- 365: 3-bit-Adresse
- 366: Kommunikationsstatus
- 367: Statusinformation

## Patentansprüche

1. Verfahren zum Übertragen von Daten zwischen einer beweglichen Einheit (103) und einer stationären Einheit (111) eines linearen Transportsystems (101), wobei das lineare Transportsystem (101) eine Führungsschiene (105) zum Führen der beweglichen Einheit (103), mehrere stationäre Einheiten (111), eine Steuereinheit (133) sowie einen Linearmotor (107) zum Antreiben der beweglichen Einheit (103) entlang der Führungsschiene (105) aufweist, wobei der Linearmotor (107) einen Stator (109) und einen Läufer (113) umfasst, wobei der Stator (109) die stationären Einheiten (111) umfasst, welche jeweils eine oder mehrere Antriebsspulen umfassen, wobei der Läufer (113) an der beweglichen Einheit (103) angeordnet ist und einen oder mehrere Magnete (117) umfasst, wobei die stationären Einheiten (111) jeweils mindestens eine stationäre Antenne (129) aufweisen, wobei die bewegliche Einheit (103) eine bewegliche Antenne (131) aufweist, wobei folgende Schritte von der Steuereinheit (133) ausgeführt werden:
- Ermitteln von Positionsdaten der beweglichen Antenne (131) der beweglichen Einheit (103);
- Auswahl derjenigen stationären Antenne (129) innerhalb des linearen Transportsystems (101), die der beweglichen Antenne (131) am nächsten ist, anhand der Positionsdaten der beweglichen Antenne (131);
- Ausgabe eines Datenpakets von der ausgewählten stationären Antenne (129) an die stationäre Einheit (111), wobei das Datenpaket ein Steuersignal umfasst, wobei das Steuersignal eine Identifikationsinformation beinhaltet, mit der die ausgewählte stationäre Antenne (129) identifiziert werden kann, wobei das Datenpaket ein über die ausgewählte stationäre Antenne (129) zu übertragendes Datensignal (300) umfasst, wobei das Datensignal (300) ein Startsequenz (301) beinhaltet, wobei die Startsequenz (301) eingerichtet ist, einen Datenempfang der beweglichen Einheit (103) zu triggern, wobei das Datensignal (300) einen an die Startsequenz (301) anschließenden ersten Kommunikationsframe (341) umfasst, wobei der erste Kommunikationsframe (341) ein Startbit (311) und zu übertragende Nutzdaten (302) umfasst, wobei der erste Kommunikationsframe (341) einen Zeitstempel umfasst.

2. Verfahren nach Anspruch 1, wobei die Startsequenz (301) mehrere Schaltflanken (313) sowie mindestens drei invertierte Stop-Bits (312) umfasst.

3. Verfahren nach einem der Ansprüche 1 oder 2, wobei der erste Kommunikationsframe (341) erste Kopfdaten (333) umfasst, wobei die ersten Kopfdaten (333) Informationen über einen Telegrammtyp (362) enthalten, wobei der erste Kommunikationsframe (341) anhand des Telegrammtyps (362) eingestellt wird.

4. Verfahren nach Anspruch 3, wobei der Telegrammtyp (362) eine Empfangsinformation eines zweiten Kommunikationsframes (342) umfasst.

5. Verfahren nach Anspruch 4, wobei der Telegrammtyp (362) eine Längeninformation des ersten Kommunikationsframes (341) umfasst und wobei die Empfangsinformation eine Längeninformation des zweiten Kommunikationsframes (342) umfasst.

6. Verfahren nach Anspruch 4 oder 5, wobei ein Kommunikationszyklus (340), bestehend aus dem ersten Kommunikationsframe (341), einer Umschaltpause (343) und dem zweiten Kommunikationsframe (342) maximal 250 Mikrosekunden dauert.

7. Verfahren nach einem der Ansprüche 1 bis 6, wobei ein erstes Datenpaket an die eine der stationären Einheiten (111) ausgegeben wird und anhand des ersten Datenpakets eine Kommunikation zwischen der stationären Einheit (111) und einer beweglichen Einheit (103) erfolgt und wobei ein zweites Datenpaket an die selbe oder eine andere stationäre Einheit (111) ausgegeben wird und anhand des zweiten Datenpakets eine Kommunikation zwischen der stationären Einheit (111) und einer beweglichen Einheit (103) erfolgt, wobei sich die beweglichen Einheiten (103) unterscheiden.

8. Steuereinheit (133), die eingerichtet ist, eines der Verfahren der Ansprüche 1 bis 7 auszuführen.

9. Computerprogramm, umfassend Programmcode, welcher ausgeführt auf einer Steuereinheit nach Anspruch 8 diese dazu veranlasst, das Verfahren der Ansprüche 1 bis 7 auszuführen.

10. Maschinenlesbares Speichermedium, umfassend das Computerprogramm nach Anspruch 9.

11. Stationäre Einheit (111) eines linearen Transportsystems (101), wobei die stationäre Einheit (111) einen Stator (109) mit einer oder mehreren Antriebsspulen zum Antrieb eines Läufers (113) umfasst, wobei die stationäre Einheit (111) eine oder mehrere stationäre Antennen (129) umfasst, wobei die stationäre Einheit (111) eingerichtet ist, ein Datenpaket von einer Steuereinheit (133) zu empfangen, wobei das Datenpaket ein Steuersignal umfassend eine Identifikationsinformation, mit der eine stationäre Antenne (129) anhand einer Position einer beweglichen Antenne (131) einer beweglichen Einheit (103) identifiziert werden kann, und ein zu übertragendes Datensignal (300) beinhaltet, anhand der Identifikationsinformation die stationäre Antenne (129) auszuwählen, die der beweglichen Antenne (131) am nächsten ist, und das Datensignal (300) über die stationäre Antenne (129) an die bewegliche Antenne (131) zu senden, wobei das Datensignal (300) eine Startsequenz (301) beinhaltet, wobei das Datensignal (300) einen an die Startsequenz (301) anschließenden ersten Kommunikationsframe (341) umfasst, wobei der erste Kommunikationsframe (341) ein Startbit (311) und zu übertragende Nutzdaten (302) umfasst, und wobei der der erste Kommunikationsframe (341) einen Zeitstempel umfasst.

12. Bewegliche Einheit (103) eines linearen Transportsystems (101), wobei die bewegliche Einheit (103) eine bewegliche Antenne (131) aufweist, wobei ein Läufer (113) an der beweglichen Einheit (103) angeordnet ist und einen oder mehrere Magnete (117) umfasst, wobei die bewegliche Einheit (103) eingerichtet ist, ein Datensignal (300) über die bewegliche Antenne (131) von einer stationären Antenne (129) zu empfangen, wobei das Datensignal (300) eine Startsequenz (301) beinhaltet, wobei das Datensignal (300) ein an die Startsequenz (301) anschließendes Startbit (311) umfasst, wobei das Datensignal (300) an das Startbit (311) anschließende Nutzdaten (302) umfasst, wobei die bewegliche Einheit (103) eingerichtet ist, die Startsequenz (301) zu identifizieren und anschließend die nach dem Startbit (311) übertragenen Nutzdaten (302) aufzuzeichnen, wobei die bewegliche Einheit (103) ferner eingerichtet ist, eine Zeitsynchronisierung anhand der Startsequenz (301) durchzuführen, wobei ein zusätzlich empfangener Zeitstempel verwendet wird.

13. Lineares Transportsystem (101) mit einer Steuereinheit nach Anspruch 8, mindestens einer stationären Einheit (111) nach Anspruch 11 und einer beweglichen Einheit (103) nach Anspruch 12, wobei der Stator (109) und der Läufer (113) einen Linearmotor (107) bilden.

## Claims

1. A method for transferring data between a movable unit (103) and a stationary unit (111) of a linear transport system (101), wherein the linear transport system (101) comprises a guide rail (105) for guiding the movable unit (103), a plurality of stationary units (111), a controller (133), and a linear motor (107) for driving the movable unit (103) along the guide rail (105), wherein the linear motor (107) comprises a stator (109) and a rotor (113), wherein the stator (109) comprises the stationary units (111), each comprising one or a plurality of drive coils, wherein the rotor (113) is arranged at the movable unit (103) and comprises one or a plurality of magnets (117), wherein the stationary units (111) each comprise at least a stationary antenna (129), wherein the movable unit (103) comprises a movable antenna (131), wherein the following steps are carried out by the controller (133):
- determining position data of the movable antenna (131) of the movable unit (103);
- selecting that stationary antenna (129) within the linear transport system (101) that is closest to the movable antenna (131) based on the position data of the movable antenna (131);
- outputting a data packet of the selected stationary antenna (129) to the stationary unit (111), wherein the data packet comprises a control signal, the control signal including identification information by which the selected stationary antenna (129) may be identified, wherein the data packet comprises a data signal (300) to be transmitted via the selected stationary antenna (129), wherein the data signal (300) comprises a start sequence (301), the start sequence (301) being configured to trigger a data receipt of the movable unit (103), wherein the data signal (300) comprises a first communication frame (341) following the start sequence (301), the first communication frame (341) comprising a start bit (311) and user data (302) to be transmitted, wherein the first communication frame (341) comprises a time stamp.

2. The method according to claim 1, wherein the start sequence (301) comprises a plurality of switching edges (313) and at least three inverted stop bits (312).

3. The method according to any one of claims 1 or 2, wherein the first communication frame (341) comprises first header data (333), the first header data (333) including information on a telegram type (362), wherein the first communication frame (341) is set based on the telegram type (362).

4. The method according to claim 3, wherein the telegram type (362) comprises receipt information of a second communication frame (342).

5. The method according to claim 4, wherein the telegram type (362) comprises a length information of the first communication frame (341), and wherein the receipt information comprises a length information of the second communication frame (342).

6. The method according to claim 4 or 5, wherein a communication cycle (340) consists of the first communication frame (341), a switching pause (343), and the second communication frame (342) is 250 microseconds or less.

7. The method according to any one of claims 1 to 6, wherein a first data packet is output to the one of the stationary units (111) and communication between the stationary unit (111) and a movable unit (103) is carried out using the first data packet, and wherein a second data packet is output to the same or a different stationary unit (111) and communication between the stationary unit (111) and a movable unit (103) is carried out based on the second data packet, wherein the movable units (103) differ.

8. A controller (133) configured to carry out any of the methods according to claims 1 to 7.

9. A computer program comprising program code which, when executed on a controller according to claim 8, causes the controller to carry out the method according to claims 1 to 7.

10. A machine-readable storage medium comprising the computer program according to claim 9.

11. A stationary unit (111) of a linear transport system (101), wherein the stationary unit (111) comprises a stator (109) having one or a plurality of drive coils for driving a rotor (113), wherein the stationary unit (111) comprises one or a plurality of stationary antennas (129), the stationary unit (111) being configured to receive a data packet from a controller (133), the data packet comprising a control signal including identification information by which a stationary antenna (129) may be identified on the basis of a position of a movable antenna (131) of a movable unit (103), and a data signal (300) to be transmitted, to select the stationary antenna (129) closest to the movable antenna (131) based on the identification information, and to transmit the data signal (300) via the stationary antenna (129) to the movable antenna (131), wherein the data signal (300) includes a start sequence (301), wherein the data signal (300) comprises a first communication frame (341) subsequent to the start sequence (301), wherein the first communication frame (341) comprises a start bit (311) and user data (302) to be transmitted, and wherein the first communication frame (341) comprises a time stamp.

12. A movable unit (103) of a linear transport system (101), wherein the movable unit (103) comprises a movable antenna (131), wherein a rotor (113) is arranged on the movable unit (103) and comprises one or a plurality of magnets (117), wherein the movable unit (103) is configured to receive a data signal (300) from the stationary antenna (129) via the movable antenna (131), wherein the data signal (300) includes a start sequence (301), wherein the data signal (300) comprises a start bit (311) subsequent to the start sequence (301), wherein the data signal (300) comprises user data (302) subsequent to the start bit (311), wherein the movable unit (103) is configured to identify the start sequence (301) and to subsequently record the user data (302) transmitted after the start bit (311), wherein the movable unit (103) is further configured to carry out a time synchronization on the basis of the start sequence (301), wherein an additionally received time stamp is used.

13. A linear transport system (101) comprising a controller according to claim 8, at least a stationary unit (111) according to claim 11, and a movable unit (103) according to claim 12, wherein the stator (109) and the rotor (113) form a linear motor (107).

## Revendications

1. Procédé de transmission de données entre une unité mobile (103) et une unité stationnaire (111) d'un système de transport linéaire (101), le système de transport linéaire (101) comportant un rail de guidage (105) pour guider l'unité mobile (103), de multiples unités stationnaires (111), une unité de commande (133) et un moteur linéaire (107) pour entraîner l'unité mobile (103) le long du rail de guidage (105), le moteur linéaire (107) comprenant un stator (109) et un rotor (113), le stator (109) comprenant les unités stationnaires (111), dont chacune comprend une ou plusieurs bobines d'entraînement, le rotor (113) étant disposé sur l'unité mobile (103) et comprenant un ou plusieurs aimants (117), les unités stationnaires (111) comportant chacune au moins une antenne stationnaire (129), l'unité mobile (103) comportant une antenne mobile (131), les étapes suivantes étant exécutées par l'unité de commande (133) :
- détermination de données de position de l'antenne mobile (131) de l'unité mobile (103) ;
- sélection de l'antenne stationnaire (129), à l'intérieur du système de transport linéaire (101), qui est la plus proche de l'antenne mobile (131), sur la base des données de position de l'antenne mobile (131) ;
- fourniture en sortie d'un paquet de données de l'antenne stationnaire sélectionnée (129) vers l'unité stationnaire (111), le paquet de données comprenant un signal de commande, le signal de commande contenant une information d'identification, au moyen de laquelle l'antenne stationnaire sélectionnée (129) peut être identifiée, le paquet de données comprenant un signal de données (300) à transmettre via l'antenne stationnaire sélectionnée (129), le signal de données (300) contenant une séquence de départ (301), la séquence de départ (301) étant conçue pour déclencher une réception de données de l'unité mobile (103), le signal de données (300) comprenant une première trame de communication (341) faisant suite à la séquence de départ (301), la première trame de communication (341) comprenant un bit de départ (311) et des données utiles (302) à transmettre, la première trame de communication (341) comprenant un marqueur temporel.

2. Procédé selon la revendication 1, dans lequel la séquence de départ (301) comprend de multiples fronts de commutation (313) ainsi qu'au moins trois bits d'arrêt inversés (312).

3. Procédé selon l'une des revendications 1 ou 2, dans lequel la première trame de communication (341) comprend des premières données d'en-tête (333), les premières données d'en-tête (333) contenant des informations concernant un type de télégramme (362), la première trame de communication (341) étant réglée sur la base du type de télégramme (362).

4. Procédé selon la revendication 3, dans lequel le type de télégramme (362) comprend une information de réception d'une deuxième trame de communication (342).

5. Procédé selon la revendication 4, dans lequel le type de télégramme (362) comprend une information de longueur de la première trame de communication (341) et l'information de réception comprenant une information de longueur de la deuxième trame de communication (342).

6. Procédé selon la revendication 4 ou 5, dans lequel un cycle de communication (340), constitué de la première trame de communication (341), d'une pause de commutation (343) et de la deuxième trame de communication (342), dure au maximum 250 microsecondes.

7. Procédé selon l'une des revendications 1 à 6, dans lequel un premier paquet de données est délivré à ladite une des unités stationnaires (111) et une communication entre l'unité stationnaire (111) et une unité mobile (103) est effectuée sur la base du premier paquet de données, et dans lequel un deuxième paquet de données est délivré à la même ou à une autre unité stationnaire (111) et une communication entre l'unité stationnaire (111) et une unité mobile (103) est effectuée sur la base du deuxième paquet de données, les unités mobiles (103) étant différentes.

8. Unité de commande (133) conçue pour mettre en oeuvre l'un des procédés selon les revendications 1 à 7.

9. Programme informatique comprenant un code de programme qui, lorsqu'il est exécuté sur une unité de commande selon la revendication 8, amène celle-ci à mettre en oeuvre le procédé selon revendications 1 à 7.

10. Support de stockage lisible par machine, comprenant le programme informatique selon la revendication 9.

11. Unité stationnaire (111) d'un système de transport linéaire (101), l'unité stationnaire (111) comprenant un stator (109) comportant une ou plusieurs bobines d'entraînement destinées à entraîner un rotor (113), l'unité stationnaire (111) comprenant une ou plusieurs antennes stationnaires (129), l'unité stationnaire (111) étant conçue pour recevoir un paquet de données en provenance d'une unité de commande (133), le paquet de données comprenant un signal de commande contenant une information d'identification, au moyen de laquelle une antenne stationnaire (129) peut être identifiée sur la base d'une position d'une antenne mobile (131) d'une unité mobile (103), et contenant un signal de données (300) à transmettre, pour sélectionner l'antenne stationnaire (129) la plus proche de l'antenne mobile (131) sur la base de l'information d'identification, et pour envoyer le signal de données (300) à l'antenne mobile (131) via l'antenne stationnaire (129), le signal de données (300) contenant une séquence de départ (301), le signal de données (300) comprenant une première trame de communication (341) faisant suite à la séquence de départ (301), la première trame de communication (341) comprenant un bit de départ (311) et des données utiles (302) à transmettre, et la première trame de communication (341) comprenant un marqueur temporel.

12. Unité mobile (103) d'un système de transport linéaire (101), l'unité mobile (103) comportant une antenne mobile (131), un rotor (113) étant disposé sur l'unité mobile (103) et comprenant un ou plusieurs aimants (117), l'unité mobile (103) étant conçue pour recevoir un signal de données (300) via l'antenne mobile (131) en provenance d'une antenne stationnaire (129), le signal de données (300) contenant une séquence de départ (301), le signal de données (300) comprenant un bit de départ (311) faisant suite à la séquence de départ (301), le signal de données (300) comprenant des données utiles (302) faisant suite au bit de départ (311), l'unité mobile (103) étant conçue pour identifier la séquence de départ (301) et pour enregistrer ensuite les données utiles (302) transmises après le bit de départ (311), l'unité mobile (103) étant en outre conçue pour effectuer une synchronisation temporelle sur la base de la séquence de départ (301), un marqueur temporel reçu supplémentaire étant utilisé.

13. Système de transport linéaire (101) comprenant une unité de commande selon la revendication 8, au moins une unité stationnaire (111) selon la revendication 11 et une unité mobile (103) selon la revendication 12, le stator (109) et le rotor (113) formant un moteur linéaire (107).
